# EUROPEAN PATENT APPLICATION

(11) **EP 1 028 095 A1**
(43) Date of publication of application: **16.08.2000**
(21) Application number: 98932547.7
(22) Date of filing: 16.07.1998
(51) Int. Cl.: C04B 20/10, C04B 20/12, C04B 28/00, C04B 28/02, C04B 28/04, B28B 23/00, B28B 23/02, B28B 23/04, B28B 23/06, B28B 23/08, B28B 23/10, B28B 23/12, B28B 23/14, B28B 23/16, B28B 23/18, B28B 23/20, B28B 23/22, B28B 3/02, B28B 3/20

(54) **REINFORCING MATERIAL, METHOD OF PRODUCTION THEREOF, REINFORCING/REPAIRING METHOD USING THE REINFORCING MATERIAL, REINFORCING/REPAIRING STRUCTURE, AND STRUCTURAL ELEMENT**

(30) Priority: 16.07.1997 JP 20706997; 22.10.1997 JP 30635997; 21.01.1998 JP 2383298; 21.01.1998 JP 2383398; 21.01.1998 JP 2383498; 21.01.1998 JP 2383598; 21.01.1998 JP 2383698; 04.02.1998 JP 3813698; 18.02.1998 JP 5285498
(71) Applicant: Toho Rayon Co., Ltd., Tokyo 103-8247 (JP)
(72) Inventor: SHIRAKI, Koji, Toho Rayon Co., Ltd, Sunto-gun, Shizuoka 411-0941 (JP); ANDOH, Masato, Toho Rayon Co., Ltd, Sunto-gun, Shizuoka 411-0941 (JP)
(74) Representative: Fiener, Josef
(86) International application number: JP9803195
(87) International publication number: WO9903796

(57) **Abstract**

This invention provides a hydraulic reinforcing material (unhardened substance) itself, and a reinforcing material (hardened substance) itself obtained by hardening the hydraulic reinforcing material which are useful for reinforcing/repairing a construction, and for manufacture of a reinforcing structural element to serve as a component structure of a construction; method for producing such a reinforcing material; a reinforcing/repairing method consisting of applying said reinforcing material to a construction or natural object, and a structure useful for such reinforcement/repair; and a structural element (structural component) incorporating the reinforcing material. The hydraulic reinforcing material (unhardened substance) comprises reinforcing fiber and unhardened, dry hydraulic inorganic powder bound together through an organic binder. The hydraulic reinforcing material has a flexibility before it contacts with water, and hardens on contact with water. The hydraulic reinforcing material effectively reinforces/repairs a construction, by being applied on its application surface, being laid below concrete placed on the application surface, or serving as a reinforcing material of structural elements.

## Description

### TECHNICAL FIELD

This invention relates to:
a hydraulic reinforcing material (unhardened material), and a reinforcing material (hardened material) obtained by hardening said hydraulic reinforcing material for reinforcing/repairing a construction (construction refers to any buildings and constructs here), or for producing a structural element (that is, a construction material such as a reinforcing rod, resilient material, reinforcing mesh, interior/exterior materials, curtain wall, permanent molding frame, free access floor, side-supporting material, cement mortar/concrete-made precast products for various exterior materials, etc.) added to a construction to serve as a reinforcing component structure;
a method for producing those reinforcing materials;
a method for reinforcing/repairing comprising applying said reinforcing materials to a construction or a natural object for reinforcing/repairing the latter; and
a reinforcing/repairing structure, or, to put it more specifically, to:
a method for reinforcing/repairing the pillars, beams and walls of a general building; stacks or the like of a general architecture; the paved surface of a road, floor plate of the elevated part of a road or railroad, and the piers of a bridge; the internal wall of a tunnel, dam, supports of a river construct, supports of a waterfront or ocean construct, supports of a construct such as an underground construction; and supports of a natural object such as the steepest slope surface of a cliff, or hill;
a reinforcing/repairing structure; and
a structural element (construction component material) incorporating said reinforcing material.

### BACKGROUND ART

There is an increasing number of general concrete-made structures, steel-made structures, paved floor of the elevated part of a road or railroad, the piers of bridge, the ceiling and walls of a tunnel, the mortar-deposited steepest slope of a cliff, or the steepest slope of a cliff or a hill-surface left as it is without having mortar applied thereupon, which lose their strength in the face of aging/wear, weathering and freezing/thawing, and injuries inflicted by earthquakes, and thus require reinforcing/repairing. Reinforcing/repairing consists of adding, for worn parts, a new construction as a finish by augmentation or concrete deposition, or of reinforcing/repairing an existing structure or a natural object.

The structural elements to be used as component structures of a construction are prefabricated materials, and the representative, well-known such materials include, for example, internal/external dressing materials, curtain wall, permanent mold, free access floor, side-supporting materials, and various exterior materials.

Generally, a structural element made of a cement-based hardening material such as mortar or concrete is advantageous in being inexpensive, as well as being high in compression strength, and excellent in resistance to fire and heat, and endurable. However, the cement-based hardening material, because of its shortcomings of being so low in tensile strength as to easily collapse, is usually used being reinforced by iron rods.

Recently, however, for reinforcing/repairing of a construction, instead of iron rods conventionally used as a reinforcing material, increasingly used is a continuous fibrous reinforcing material made of carbon fiber, glass fiber or aramid fiber prepared in the form of rods, ropes, cables, strips, or grid.

These reinforcing materials and the methods therefor have been developed to compensate for the shortcomings of the conventional reinforcing materials such as iron rods and PC steel, or shortcomings of lowered workability during installment because of their heaviness, readiness to develop rust, preference for creep, etc. For example, "Guidance for the designing/construction of concrete constructions based on the use of continuous fibrous reinforcing materials (draft)" edited by Japan Society of Civil Engeneering introduces CFCC construction method, lead line construction method, technola construction method, FIBRA construction method, Arapree construction method and Nefmac construction method, etc.

Carbon fiber is excellent in mechanical properties, and in resistance to fire and heat, and in durability, and moreover because it is provided at a comparatively low cost owing to the improved productivity at factories, it has steadily been more consumed to serve as a reinforcing/repairing material used in building and construction industries. In building and construction industries, carbon fiber materials such as described in (1) to (3) below are used.
(1) A sheet made of a carbon fiber plus thermosetting resin reinforced material, a carbon fiber dry sheet or carbon fiber strand is used as a reinforcing/repairing material, instead of a material based on steel plate application or augmentation.
(2) Carbon fiber reinforced plastics in the form of ropes or cables are used as fibrous reinforcing rods instead of PC steel.
(3) Carbon fiber chopped strands are evenly dispersed into mortar or concrete, to serve as a reinforcing material instead of asbestos, steel fiber or alkali-resistant glass fiber.

Each of the carbon fiber materials as described in (1) to (3) above takes advantage of the features of carbon fiber in its own way, to replace thereby conventional construction materials, but has unique problems as described below.

With regard to the material as described in (1), a carbon fiber plus thermosetting resin reinforced sheet or carbon fiber strand has been increasingly used for reinforcing/repairing of the pillars, beams and walls of a general building, supports of the elevated part of a road or railroad, and paved floors. These examples represent how are put into use the materials developed to compensate for the shortcomings of conventional reinforcing materials, for example, an iron plate which shows a lowered workability during installment because of its heavy weight, requires the insertion of grout into the gap it forms against a footing because of its not being compliant with the surface of the footing after it has been placed on the footing, and causes an increment in dead weight because the iron plate itself used for repairing/reinforcing has a significant weight.

For example, in Japanese Patent Laid-Open Nos. 1-197532, 3-224966, 5-38718 and 6-270335 are proposed reinforcing/repairing methods in which a so-called carbon fiber reinforced thermosetting resin prepreg sheet obtained by having immersed carbon fiber in a thermosetting resin is applied to a concrete or steel construction.

In addition, in Japanese Patent Laid-Open Nos. 7-34677 and 3-222734 are proposed a carbon fiber reinforced, thermosetting resin prepreg sheet with a low resin content, and a carbon fiber dry sheet with practically or completely no resin content, and a method in which the sheets are immersed at site for hardening into a resin composition capable of hardening at normal temperatures.

The carbon fiber reinforced, thermosetting resin prepreg sheet with a low resin content, or the carbon fiber dry sheet with practically or completely no resin content is advantageously so light in weight that it can be cut at site easily into desired shapes according to the site to be reinforced of a concrete construction or to the shape of a mold.

However, it still has problems as described in i) - iii) below.
i) The material as described in (1) above, because of incorporating a combustible resin as a matrix, requires the application of a flame-resistant coat after the carbon fiber reinforced, thermosetting resin prepreg sheet or carbon fiber dry sheet made thereof has been applied to a site to be reinforced/repaired, in order to prevent the spread of fire in case it is exposed to flame.
ii) The material as described in (2) above, because of the carbon fiber reinforced, thermosetting resin prepreg sheet or carbon fiber dry sheet made thereof which is an organic substance being unable to keep an intimate contact with a concrete footing or flame-resistant coat which is an inorganic substance, requires a priming treatment before it is applied to the concrete footing, or before it receives the flame-resistant coat, and this complicates procedures.
iii) Moreover, if a concrete footing has a high water content, it will be necessary to introduce a drying period in case a primer is disturbed in hardening, and this will lead to a lengthened construction period.

On the other hand, in Japanese Patent Publication No. 5-68420 is proposed a hydraulic prepreg which is a fibrous complex with a slurry comprising a hydraulic inorganic powder and water as a matrix. Concrete constructions to which the fibrous complex hydraulic prepreg has been applied for reinforcing/repairing are usually an inorganic substance and thus are so excellent in resistance to fire and heat as to dispense with the use of a fire-preventive or fire-resistant coat, thereby avoiding the need for priming process.

However, because the fibrous complex hydraulic prepreg (hydrophilic) contains water as its constituent, and hardens in a few hours to days as a result of hydration reaction of the hydraulic inorganic powder, it is impossible to deliver the prepreg produced in a factory to site for use there.

With regard to the material described in (2) above, recently, an increasing number of ropes or cables made of carbon reinforced plastics has been used as a resilient material of pre-stressed concrete slab, or as a principal reinforcing material of a newly built concrete construction. This is because iron rods or PC steel conventionally serving as a reinforcing material causes a lowered workability during installment because of its heavy weight, is ready to develop rust and tends to creep, and this material and the method are therefor developed to compensate for those shortcomings.

For example, in Japanese Examined Utility Model Nos. 6-15078 and 7-35948 is proposed a method in which reinforced fibrous strand is immersed in a resin, a number of such strands are twisted into a so-called composite cable, and that composite cable is used as a reinforcing material.

The continuous fibrous reinforcing material like the composite cable as described above is advantageously light in weight and free from problems related to creep or rust developing tendencies, but has following problems.

The composite cable, because of its incorporating an easily combustible resin, would cause the mechanical endurance of a construction to which it has been applied to be severely impaired if the construction caught fire unless the construction has a sufficiently thick concrete covering.

Further, when the resin serving as a matrix of the continuous fibrous reinforcing material hardens, it is refractory to bending, and thus it is impossible to use such a continuous fibrous reinforcing material as a crosswise reinforcing material of a concrete construction or a precast concrete product. This poses a problem.

Furthermore, because the resin incorporated in such a continuous fibrous reinforcing material scarcely has affinity with a cement-based hardened substance, it could not develop a sufficient strength even if it were incorporated in a cement-based construction or precast concrete product unless precaution is taken such that the continuous fibrous reinforcing material is given an uncommon cross-section. This poses another problem.

With regard to the material described in (3) above, recently, carbon fiber chopped strands have been increasingly made, after being evenly dispersed into mortar or concrete, into a precast product, or used as a reinforcing material of spray depositing concrete. Carbon fiber strands have been increasingly used in the following way: they are introduced into a hopper gun, and, while being cut into pieces of a specific length, are applied by spraying, together with mortar slurry or concrete slurry, onto a mold or the like.

These materials and the methods therefor have been developed to compensate for the shortcomings described later of conventional reinforcing materials such as steel fiber, asbestos, alkali-resistant glass fiber, and organic fiber made of vinylon, acryl, polypropylene, etc. Steel fiber is problematic in being heavy like steel plate or iron rods as described above, and in easily developing rust; asbestos is problematic in being indicated that it risks the safety of human body; and glass fiber is problematic in being damaged in the presence of alkalinity when incorporated into cement, showing a lowered strength when used over a long period. Even the alkali-resistant glass fiber is not completely free from the problem described above. Lastly, various organic fibers are also problematic in their low resistance to fire and heat.

Carbon fiber is excellent in physical properties, in resistance to fire and heat, in durability, and in resistance to alkalinity, and does not develop rust nor risk the safety of human body. Thus, it is a desirable reinforcing material to compensate for the shortcomings of various fibrous reinforcing materials described above. However, conventionally carbon fiber could not present its excellent mechanical properties for following reasons.

One of the reasons is related to a case where a general purpose concrete mixer is used for preparing carbon fiber reinforced mortar/concrete slurry. Then, carbon fiber often turns into fiber balls refractory to infiltration by slurry, and thus if such slurry were applied by pressure, injected via a nozzle or deposited by spraying onto the surface of a mold, the resulting slab would collapse from the slurry portions devoid of carbon fiber because stresses will concentrate onto those portions.

This holds true for another case where carbon fiber strands are introduced into a hopper gun, and deposited by spraying onto a mold together with mortar slurry or concrete slurry while being cut into pieces of a specific length. In this case too carbon fiber is scarcely mixed evenly with slurry, and thus the resulting carbon fiber reinforced mortar/concrete will have a lowered strength.

To provide solutions to the problem involved in the uneven dispersion of carbon fiber chopped strands in mortar or concrete, many proposals have been offered. One example of such proposals is the method offered by Akihama in the Proceedings of Meeting of Japanese Architecture Society No. 316, 1982 in which the use of a special mixer such as an omni mixer is proposed. In Japanese Patent Publication No. 3-14607 and Japanese Patent Laid-Open No. 59-33105 is proposed a method in which short carbon filaments shaped like cotton are put into cement powder while being spread into individual filament, to be kneaded dry and to serve as premix cement.

However, all these methods require expensive facilities. Particularly, with the latter method, the mixing ratio of carbon filaments is determined by the manner how the carbon filaments are mixed with cement in a factory, and can not be adjusted freely at site. This poses a problem.

Another so-called premix method is proposed in Japanese Patent Laid-Open No. 63-67109 in which carbon fiber in the form of short fibers is mixed together with cement, aggregate, water and various mixing materials, dispersed into cement-based slurry such as mortar slurry or concrete slurry, and molded by spraying, placing, extrusion or compression into a product.

However, because a large amount of thickening agent must be added together, the cement-based slurry comes to have such a high viscosity that its readiness for handling is impaired. Further, if a large amount of methyl cellulose or polyethylene glycol is added as a thickening agent, it attracts air during kneading. Therefore, a slab which is obtained by applying the cement-based slurry by pressure, injection via a nozzle or deposition by spraying onto the surface of a mold will become weaker, contrary to expectation, than the same slurry containing no such carbon fiber.

Furthermore, with the premix method based on the use of the carbon fiber, if filaments have a too large length, it will be difficult to disperse them evenly in the matrix of cement-based slurry. Therefore, within the cement-based slurry will develop unwetted portions which have a lowered strength. Thus, the resulting slab will become weaker, contrary to expectation, than the same cement-based slab not reinforced by such carbon fiber. This poses a problem. The fluidity of the cement-based slurry is also impaired. This poses another problem.

On the other hand, if the carbon fiber has a too small length, it will not be able to maintain a sufficient contact area with cement matrix. Therefore, if the resulting carbon fiber reinforced cement-based hardening substance develops stresses, the composite material will be broken as a result of carbon fiber being pulled out from cement matrix. Thus, this hardening substance will not be able to take full advantage of the merits of high mechanical strength of carbon fiber. This poses a still further problem.

As an alternative to the premix method, is known a direct spraying method in which carbon fiber in the form of strands is introduced into a spraying gun and is applied, while being cut with a roving cutter, by spraying together with cement-based slurry onto a site or surface requiring reinforcement/repairment of a construction or a natural object.

With this direct spraying method, it is necessary to add a gathering agent or sizing agent to prevent carbon fiber from aggregating into balls, which might result if carbon fiber injured by the guides of hopper gun is left as it is. However, the gathering agent or sizing agent interferes with the spread of carbon filaments during spraying, and thus the carbon fiber and cement-based slurry will not mix evenly with each other. Therefore, the resulting slab will have a lowered strength as in the premix method. This poses a problem.

As is obvious from above, in the production of reinforced carbon fiber, particularly of carbon fiber reinforced cement-based hardening substance based on the conventional premix method or direct spraying method utilizing carbon fiber, the resulting carbon fiber reinforced cement-based hardening substance could not take full advantage of its high strength. This poses a problem.

The present invention is obtained after strenuous study has been made to solve the above problems, and aims at achieving the following first to fourth objects.
I. The first object of this invention is to provide a hydraulic reinforcing material capable of hardening in the presence of water which is excellent in workability, adherence to cement-based mortar/concrete, resistance to fire and heat, and durability as a reinforcing material to be used when a concrete construction is newly built, or when a concrete construction is reinforced/repaired, and the production method thereof; and another hydraulic reinforcing material capable of hardening in the presence of water useful as a reinforcing material of a cement-based mortar/concrete precast product, and the production method thereof.
II. The second object of this invention is to provide a hardened substance obtained from a hydraulic reinforcing material, which is excellent in workability, adherence to cement-based mortar/concrete, resistance to fire and heat, and durability as a reinforcing material to be used when a concrete construction is newly built, or when a concrete construction is reinforced/repaired; and a hardened substance obtained from a hydraulic reinforcing material to be used as a reinforcing material of a cement-based mortar/concrete precast product.
III. The third object of this invention is to provide a reinforcing/repairing method whereby it is possible, when constructs such as concrete constructions (including iron-rod reinforced concrete constructions), the pillars of a steel construction, the piers of a bridge, beams and floor plates, walls, stacks, the internal walls of a tunnel, dam, river constructs, etc. must be reinforced/repaired, to insure workability, long life, adherence to the construct, excellent reinforcing effects, and strict resistance to fire and heat, and durability of reinforced/repaired objects; and a structure for reinforcing/repairing constructions which is obtained by said reinforcing/repairing method.
   Another object related with the third object is to provide another reinforcing/repairing method which can be applied, in addition to said constructs, to natural objects such as rocks, soil, etc., and a reinforcing/repairing structure used therefor.
   A still another object related with the third object is to provide still another reinforcing/repairing method which, when a concrete construction (including iron-rod reinforced concrete constructions) must be newly built, a steel construction must be reinforced for finish, an existent construction having a makeup as above must be repaired, or a natural object must be reinforced/repaired, it is possible to use a reinforcing material incorporating reinforcing fiber in the form of short fibers, particularly carbon fiber in the form of short fibers in such a way as to take full advantage of the high strength of such filaments, thereby to insure excellent reinforcing effects, workability, strict resistance to fire and heat, and durability of reinforced/repaired objects; and a reinforcing/repairing structure used therefor.
IV. The fourth object of this invention is to provide a method for producing a structural element made of a fiber reinforced cement-based hardened substance which is easily applied for the production of a structural element such as precast concrete products to be used for exterior/interior materials, curtain wall, permanent mold, free access floor, side-supporting materials, various exterior materials, etc., and which is excellent in resistance to fire and heat, and durability; and said structural element. It should be noted here that the term "structural element" mentioned in relation to each feature of the invention presented in this specification refers to a prefabricated component material to be used as a component structure of a construction including buildings.
   Another object related with the fourth object of this invention is to provide a method for producing a structural element made of a fiber reinforced cement-based hardened substance incorporating reinforcing fiber which, when made into a structural element consisting of a cement-based hardened substance reinforced by carbon fiber in the form of short fibers, incorporates reinforcing fiber being affinity with cement slurry, without impairing the strength of reinforcing fiber nor developing any gaps or voids when being applied onto cement slurry; and a structural element made of a highly strong fiber reinforced cement-based hardened substance obtained by said method.

### DISCLOSURE OF INVENTION

### I. The Means to Achieve the First Object of This Invention.

The means by which to achieve the first object of this invention are as follows.

### Hydraulic reinforcing material

The fiber-compounded hydraulic reinforcing material of this invention required for the achievement of the first object contains at least constitutive elements [A], [B] and [C], of which [A] and [C] will put on each other through [B], is flexible before it comes into contact with water, and hardens when coming into contact with water.
[A] represents reinforcing fiber;
[B] represents organic binder; and
[C] represents unhardened and dry hydraulic inorganic powder.

The reinforcing fiber to be incorporated into the fiber-compounded hydraulic reinforcing material of this invention may preferably include carbon fiber, aramid fiber, vinylon fiber, acryl fiber, glass fiber, etc., most preferably carbon fiber or carbonaceous fiber. Blends containing different kinds of fiber may be used. Particularly blends containing carbon fiber are preferred. Use of vinylon fiber or acryl fiber is preferred because it will confer resistance to deformation to the yield. The term "carbon fiber" used in relation to each feature of this invention presented in this specification refers to fiber containing 90 wt.% or more carbon which is obtained by using acryl fiber, petroleum or coal pitch, or rayon fiber as a material and firing it in a blast furnace. The term " carbonaceous fiber" used in relation to each feature of this invention presented in this specification refers to fiber whose property is in the middle between carbon fiber and preoxidation fiber, and carbon content is 70 - 90 wt.%. The carbonaceous fiber may include what is described in, for example, Japanese Patent Laid Open Nos. 61-119717 and 61-119719. Carbonaceous fiber has an affinity with water that it is particularly suitably applied to concrete constructions.

The preferred form of the fiber-compounded hydraulic reinforcing material required for the achievement of the first object of this invention may be chosen from groups 1) to 3) described below:
1) Group of long fiber chosen from strands, rovings, ropes and braids;
2) Group of short fiber which is obtained by cutting the long fiber of group 1) into short fiber of a specific length; and
3) Group of web which is chosen from an unidirectional sheet, fabric, net, unwoven fabric and mat.

The short fiber-compounded hydraulic reinforcing material is obtained by cutting a continuous fiber-compounded hydraulic reinforcing material into the fiber of a specific length, or obtained particularly preferably by cutting a continuous fiber-compounded hydraulic reinforcing material in the form of strands into the fiber of a specific length. For the fiber-compounded hydraulic reinforcing material of this invention, the ratio of an organic binder against hydraulic inorganic powder should be kept minimal as long as the resistance of the yield to fire is taken into account. However, if the ratio in question is too small, the hydraulic inorganic powder will part when the yield is prepared and used at site. To avoid this, it is desirable to keep the ratio of organic binder against the overall sum of reinforcing fiber plus hydraulic inorganic powder plus organic binder at 0.1 - 40 vol.%, or particularly preferably at 1 - 10 vol.%. Incidentally, the proper ratio of each component such as reinforcing fiber, hydraulic inorganic powder and organic binder can be determined by the following procedures.
(1) Weigh a hydraulic inorganic reinforcing material.
(2) Dissolve the hydraulic inorganic reinforcing material into an organic solvent to which only the organic binder is soluble out of the constitutive components of the hydraulic reinforcing material.
(3) Filtrate the organic binder solution thereby to separate it from the reinforcing fiber and hydraulic inorganic powder, evaporate the organic solvent from the organic binder solution, and get a weight of the organic binder.
(4) Take what is left after filtration, and wash out the hydraulic inorganic powder adherent to the reinforcing fiber.
(5) Dry the reinforcing fiber, and weigh it to get a weight thereof.
(6) Get the dry weight of hydraulic inorganic reinforcing material, and subtract the weights of binder and reinforcing fiber determined as above from the dry weight in question, to get a weight of the hydraulic inorganic powder.
(7) Determine the volume ratio of each component by dividing its weight by its specific gravity.

Incidentally, if the organic binder is a thermosetting resin, the following procedures should be employed: fire the organic binder, determine the weight of an organic binder from the weight loss occurring as a result of firing, and determine the weight of each component following procedures (4) - (7) above.

The term "roving" used in relation to each feature of the invention presented in this specification refers to several or several tens pieces of strands arranged in parallel, without being twisted, into a bundle. The term "rope" refers to several or several tens pieces of strands or rovings twisted into a bundle.

The term "hydraulic" used in this specification refers to a property of an object related with its being flexible when it is kept off from water, and thus reaction does not start or is kept from starting, and its becoming hard gaining strength when it is allowed to contact with water, and thus hydration reaction is initiated or restarted.

With the fiber-compounded hydraulic reinforcing material provided by this invention, its draping and handling properties will be more excellent than the content of hydraulic inorganic powder becomes smaller with respect to the total bulk of the hydraulic reinforcing material. However, if the hydraulic inorganic powder were not dispersed securely between reinforcing filaments, the yield could not fully develop its feature after it has hardened in the presence of water.

To avoid this inconvenience, it is preferred to keep the content of hydraulic inorganic powder against the total bulk of the fiber-compounded hydraulic reinforcing material at 50 - 99% in terms of the volume percentage, or particularly preferably at 70 - 95%, although this value may vary depending on the diameter and particle size of reinforcing fiber and hydraulic inorganic powder.

The hydraulic inorganic powder used in this invention usually includes ordinary portland cement, white portland cement, high-early strength portland cement, ultra high-early strength portland cement, portland blast furnace cement, alumina cement, silica cement, sulfate resistant cement, fly ash cement, and blast furnace slag having a potentiality of hardening in the presence of water, silica fume, and powder containing as a main ingredient a mixture of fly ash or powdered ferrite. Further, hardening accelerator or expanding admixrure such as plaster, calcium aluminate, calcium sulfoaluminate, sodium silicate, aluminate, burnt potassium alum, etc. may be added as appropriate.

The particle diameter of hydraulic inorganic powder should preferably be three times or more as large as that of short fibers serving as reinforcing fiber. To put it more specifically, the particle diameter of hydraulic inorganic powder should preferably be 0.1 - 100 micrometers, or more preferably 0.1 -20 micrometers, or most preferably 0.1 - 6 micrometers. If the average diameter of hydraulic inorganic powder exceeded 100 micrometers, and carbon fiber used as reinforcing fiber, the yield would present some trouble of the breakage of carbon fiber. If the average particle diameter of hydraulic inorganic powder were too large with respect to the size of short fibers serving as reinforcing material, the percentage volume of reinforcing fiber would be kept low, and thus the strength of resulting hydraulic inorganic reinforcing material would be kept low too. On the other hand, as the average diameter of hydraulic inorganic powder becomes small, the resulting fiber-compounded hydraulic reinforcing material will give a sharply incrementing tensile strength after it has hardened. This is probably because then the hydraulic inorganic material will be packed most densely between reinforcing filaments to drive out voids. However, if the average particle diameter of hydraulic inorganic powder were smaller than 0.1 micrometer, the specific area of the powder would increase, the viscosity of slurry would also increase, and thus infiltration of the powder into the gaps between reinforcing filaments would be difficult.

To prevent such an increase of a slurry viscosity, if the weight of binder solution relative to the weight of inorganic powder were increased during the preparation of slurry, the process to remove the binder would require a longer time than is required when the ratio in question is kept at normal. Moreover, in the resulting hydraulic inorganic reinforcing material, a large number of voids would develop at the sites binder has occupied, and thus porosity would increase, which might lead to a reduced strength of that hydraulic inorganic reinforcing material. This is disadvantageous.

The fiber-compounded hydraulic reinforcing material of this invention can be used, as a substitute for a sheet reinforced by a fiber plus thermosetting resin reinforced material or a steel plate, for the production of precast products made of cement mortar-based concrete, building of new concrete constructions or reinforcing/repairing of concrete constructions.

With the fiber-compounded hydraulic reinforcing material of this invention, when it is given water at the site of construction, the hydraulic inorganic powder forming matrix hydrates and then hardens. With the fiber-compounded hydraulic reinforcing material of this invention, if it is wrapped by a moisture-proof material, it will be possible to keep it over a long period, as long as moisture from the atmosphere is kept off so that it may not harden that material.

With the fiber-compounded hydraulic reinforcing material of this invention because the majority of its constituents are inorganic, it is excellent in resistance to fire and heat, and in adherence to mortar and concrete. Hence, it will not catch fire even if the building to which it is applied is burnt by fire, and thus it does not require a fireproof or resistant coat thereupon. Moreover, the adherence of an inorganic substance to another inorganic substance will make it unnecessary to resort to a priming treatment at site. The fiber-compounded hydraulic reinforcing material of this invention is so light in weight and excellent in drape that workability related with installment of crosswise reinforcing rods is markedly improved and still the force resisting the activity of the construction will not be impaired because of this even if the construction is burnt by fire. Further, if it is dispersed evenly in mortar or concrete, in place of conventional reinforcing fiber in the form of chopped strands, no void will develop in concrete, and thus the strength of reinforcing fiber will easily develop fully in the resulting composite material.

### Manufacture of the hydraulic reinforcing material

The commonest method for obtaining a fiber-compounded hydraulic reinforcing material having properties as described above is: (1) preparing organic binder solution dispersing a hydraulic inorganic powder by using hydraulic inorganic powder, a dispersion medium to disperse the hydraulic inorganic powder, and an organic binder; (2) applying the organic binder solution dispersing a hydraulic inorganic powder obtained in the foregoing step to reinforcing fiber, thereby causing the organic binder solution dispersing a hydraulic inorganic powder to bind to the surface of the reinforcing fiber and/or to impregnate reinforcing fibers; (3) subjecting the reinforcing fiber having a layer of organic binder dispersing hydraulic inorganic powder thereupon to a drying and/or heating treatment.

The term "organic binder solution" in this specification refers to what results after an organic binder has been dissolved, emulsified, or dispersed in water or an organic solvent.

In the said method for obtaining a fiber-compounded hydraulic reinforcing material, the means by which to apply the solution with hydraulic inorganic powder dispersed therein to reinforcing fiber may be chosen from an air doctor coater, blade coater, rod coater, knife coater, squeeze coater, dip coater, reverse roll coater, transfer roll coater, gravure coater, and kiss coater, and the method therefor may be chosen from cast coating, spray coating, slot orifice coating, and extrusion coating.

Manufacture of a fiber-compounded hydraulic reinforcing material of this invention may vary depending on whether water is absent in the production procedures (process i described below) or present (process ii below).

### i) the Production process where water is absent

Manufacture of a fiber-compounded hydraulic reinforcing material of this invention on the condition that water is absent in the production procedures may take place by the following three methods.

The first method of this invention for producing a fiber-compounded hydraulic reinforcing material is:
(1) dispersing hydraulic inorganic powder into organic solvent;
(2) introducing reinforcing fiber into the thus obtained hydraulic inorganic powder dispersant, thereby causing the hydraulic inorganic powder dispersant to put on the surface of reinforcing fiber and/or the same dispersant to impregnate reinforcing fibers;
(3) subjecting the reinforcing fiber having a layer of organic binder dispersing hydraulic inorganic powder thereupon to a drying and/or heating treatment; and obtaining a fiber-compounded hydraulic reinforcing material binding the hydraulic inorganic powder around reinforcing fiber through an organic binder.

The second method of this invention for producing a fiber-compounded hydraulic reinforcing material is:
(1) introducing reinforcing fiber into organic binder solution, thereby causing an organic binder put on the surface of reinforcing fiber and/or the same binder to impregnate reinforcing fibers;
(2) passing the reinforcing fiber having a layer of organic binder thereupon through a vessel containing hydraulic inorganic powder, thereby causing the hydraulic inorganic powder to bind to the reinforcing fiber;
(3) subjecting the reinforcing fiber having a layer of organic binder with hydraulic inorganic powder bound to a drying and/or heating treatment; and obtaining a fiber-compounded hydraulic reinforcing material binding the hydraulic inorganic powder around reinforcing fiber through an organic binder.

The third method of this invention for producing a hydraulic reinforcing material is:
(1) dispersing hydraulic inorganic powder into organic binder solution;
(2) introducing reinforcing fiber into the thus obtained hydraulic inorganic powder dispersant, thereby causing the hydraulic inorganic powder dispersant to put on the surface of reinforcing fiber and/or the same dispersant to impregnate reinforcing fibers;
(3) passing the reinforcing fiber having a layer of hydraulic inorganic powder thereupon through a vessel containing organic binder solution, or spraying organic binder solution onto the same reinforcing fiber, thereby coating the surface of reinforcing fiber with the organic binder, and/or infiltrating the organic binder between the reinforcing fibers;
(4) subjecting the reinforcing fiber having a layer of organic binder with hydraulic inorganic powder bound to a drying and/or heating treatment; and obtaining a fiber-compounded hydraulic reinforcing material binding the hydraulic inorganic powder around the reinforcing fiber through an organic binder.

The expression "binding the hydraulic inorganic powder to reinforcing fiber through an organic binder" means here adhering or binding hydraulic inorganic powder to the surface of reinforcing fiber through an organic binder, and thereby to wrap up or sandwich the hydraulic inorganic powder with glue composed of an organic binder, reinforcing fiber and part of hydraulic inorganic powder, and to binding the hydraulic inorganic powder to reinforcing fiber.

If individual particles of hydraulic inorganic powder are adhered together through an organic binder, the end may be binding to the surface of reinforcing fiber.

Next, a manufacture of a sheet, or a more concrete example made of a fiber-compounded hydraulic reinforcing material of this invention based on three methods as described above will be outlined below in terms of the manufacture of a unidirectional sheet for which continuous fiber consisting of carbon filaments serving as reinforcing fiber have been placed taut in parallel in one direction.

The manufacture of a unidirectional sheet based on the first method: reinforcing strands placed taut in parallel in one direction are continuously immersed into an organic binder solution with hydraulic inorganic powder dispersed therein while being pulled under a constant tension, to allow the reinforcing fiber to be wetted with the dispersing solution; the yield is subjected to a drying or heating treatment; and finally hydraulic inorganic powder is allowed to adhere around the reinforcing fiber through the organic binder to obtain a fiber-compounded hydraulic reinforcing material.

Manufacture of a unidirectional sheet based on the second method: reinforcing strands placed taut in parallel in one direction are continuously immersed into an organic binder solution to thereby form a layer of organic binder on the surface of reinforcing fiber; then the yield is allowed to pass through a vessel containing hydraulic inorganic powder, to thereby bind the hydraulic inorganic powder to the layer of organic binder formed on the surface of reinforcing fiber; the yield is subjected to a drying or heating treatment; and finally hydraulic inorganic powder is allowed to adhere around the reinforcing fiber through the organic binder to obtain a fiber-compounded hydraulic reinforcing material.

Manufacture of a unidirectional sheet based on the third method: reinforcing strands placed taut in parallel in one direction are continuously immersed into an organic solvent with hydraulic inorganic powder dispersed therein while being pulled under a constant tension, to allow the hydraulic inorganic powder to adhere to or impregnate the reinforcing fiber; then the yield is introduced into a bath containing organic binder solution, to be later subjected to a drying or heating treatment; and finally hydraulic inorganic powder is coated onto the reinforcing fiber through the organic binder to obtain a fiber-compounded hydraulic reinforcing material.

### ii) Production process where water is present(watery process)

The commonest method for obtaining a hydraulic reinforcing material through the production process where water is present (may be termed as "watery process" hereinafter) is:
(1) using a dispersion medium, hydraulic inorganic powder to be dispersed into said medium, an dissolving agent to dissolve an organic binder, an organic binder to be dissolved in said dissolving agent, and other admixtures to be used as needed, and causing at least one of said dispersion medium, said dissolving agent and said other admixtures to contain water, and applying above components one after another in above order or simultaneously to reinforcing fiber, while using an set-retarding means to retard the setting of hydraulic inorganic powder, thereby causing the above components to bind to the surface of reinforcing fiber or to impregnate reinforcing fibers; and sequently,
(2) depriving the reinforcing fiber having undergone the foregoing treatment of water and/or organic solvent derived from the dispersion medium, dissolving agent for organic binder, and other admixtures added as needed used in the foregoing step, thereby binding the hydraulic inorganic powder around the reinforcing fiber, to obtain a fiber-compounded hydraulic reinforcing material having the properties as described above.

In a non-watery process, setting retardation is achieved by allowing an setting retarder to be present in water. Such setting retarder may include one or more chosen from a group comprising organically dissolving agents, setting retarders and high performnance setting retarders. An organic solvent serving as a hardening retarder may also serve as a dispersant to disperse hydraulic inorganic powder or a dissolving agent to dissolve an organic binder.

The admixture may include one or more chosen from a group comprising water reducing admixture, air entirying water reducing admixture, high performance water reducing admixture, fluidizers, setting retarders, high performnance setting retarders and polymer dispersants for the cement mixture. The admixture is for increasing and improving the density and texture of fiber-compounded hydraulic reinforcing material.

The organic binder may include one chosen from water soluble polymer binders, and emulsions of various polymers, dispersions of various polymers. As the more concrete examples of the watery process following three methods may be mentioned.

The first method representing watery process is:
(1) adding, to organic binder solution obtained by dissolving an organic binder into water or an organic solvent, water or a dispersion medium containing a mixture of water and an organic solvent, and, as needed, one or more chosen from a group comprising setting retarders and highly-active retarders, and then causing hydraulic inorganic powder to disperse into the thus obtained solution;
(2) introducing reinforcing fiber into the thus obtained organic binder solution dispersing a hydraulic inorganic powder, thereby causing the organic binder solution dispersing a hydraulic inorganic powder to bind to the surface of reinforcing fiber and/or said binder solution to impregnate reinforcing fibers;
(3) subjecting the reinforcing fiber as treated in the foregoing step to a drying and/or heating treatment, thereby depriving the reinforcing fiber of water and/or organic solvent; and
(4) obtaining a fiber-compounded hydraulic reinforcing material which has hydraulic inorganic powder bound around the reinforcing fiber through an organic binder.

The second method representing watery process or a process in which water is present is:
(1) dissolving an organic binder into water or an organic solvent, adding, as needed, one or more chosen from a group comprising setting retarders and highly-active retarders, and then introducing reinforcing fiber into the resulting organic binder solution, thereby causing the organic binder solution to put on the surface of reinforcing fiber and/or said binder solution to impregnate reinforcing fibers,
(2) passing the reinforcing fiber having a layer of organic binder thereupon through a vessel containing hydraulic inorganic powder, thereby causing the hydraulic inorganic powder to bind to the reinforcing fiber;
(3) subjecting the reinforcing fiber as treated in the foregoing step to a drying and/or heating treatment, thereby depriving the reinforcing fiber of water and/or organic solvent; and
(4) obtaining a fiber-compounded hydraulic reinforcing material which has hydraulic inorganic powder bound around reinforcing fiber through an organic binder.

The third method representing watery process or a process in which water is present is:
(1) adding, to water or a dispersion medium obtained by mixing water and an organic solvent, as needed one or more chosen from a group comprising setting retarders and highly-active retarders, and then dispersing hydraulic inorganic powder therein;
(2) introducing reinforcing fiber into the thus obtained hydraulic inorganic powder dispersant, thereby causing the hydraulic inorganic powder dispersant to put on the surface of reinforcing fiber and/or said dispersant to impregnate reinforcing fibers;
(3) passing the reinforcing fiber as processed in the foregoing step through a vessel containing organic binder solution obtained by dissolving an organic binder into water or an organic solvent, thereby causing the reinforcing fiber to contact with the organic binder solution, or spraying the organic binder solution onto the reinforcing fiber, thereby coating the surface of reinforcing fiber with the organic binder and/or causing the organic binder to impregnate reinforcing fibers;
(4) subjecting the reinforcing fiber as treated in the foregoing step to a drying and/or heating treatment, thereby depriving the reinforcing fiber of water and/or organic solvent; and
(5) obtaining a fiber-compounded hydraulic reinforcing material which has hydraulic inorganic powder bound around reinforcing fiber through an organic binder.

With the first to third methods representing the watery process, the addition amount of aggregating activity retarder should preferably be 0 - 99 wt.% in terms of the ratio of organic solvent/(water + organic solvent), if the aggregating activity retarder is represented by the organic solvent, or 0.1 - 5 weight parts with respect to 100 weight parts of hydraulic inorganic powder, if the aggregating activity retarder is chosen from a group comprising setting retarders and high performnance setting retarders, because then it could effectively inhibit the hydration reaction between water serving the as dissolving agent and hydraulic inorganic powder.

The clause "the hydraulic inorganic powder has been bound around the reinforcing fiber through the organic binder" means here adhering or binding hydraulic inorganic powder to the surface of reinforcing fiber through an organic binder, and thereby to wrap up or sandwich the hydraulic inorganic powder with glue composed of the organic binder, reinforcing fiber and part of hydraulic inorganic powder, and to bind the hydraulic inorganic powder to reinforcing fiber. If individual particles of hydraulic inorganic powder are sandwiched together through the organic binder, its ends may be bound to the surface of reinforcing fiber.

For watery process, it is essential for at least one chosen from the dispersant, organic binder dissolving agent, and admixture to contain at least water.

If water is used as a dispersant of hydraulic inorganic powder, addition of the above mentioned admixture will be possible. The admixture is a water reducing admixture, an air entirying water reducing admixture, high performance water reducing admixture, fluidizer, or polymer dispersant for a cement mixture dissolved in water. Therefore, if the dissolving agent of hydraulic inorganic powder is water, and the aqueous solution of admixture is added to that dissolving agent or water, it will be possible to reduce and improve the viscosity and fluidity of dispersant. Hence, workability is improved; infiltration facilitated; and the use amount of dispersant reduced, which will lead to the reduction of a time required for the dissolving agent deprivation process. The product obtained after drying process is also advantageous in giving improved quality as represented by elimination of voids from the sites dispersant has occupied which, if left as they are, would reduce the strength of resulting hydraulic reinforcing material.

If water is used as a dissolving agent of the organic binder, it is possible to use a hydrophilic organic binder such as emulsions of various polymers, and dispersions of various polymers. For example, polyethylene oxide or methylcellulose is a preferred binder to bind hydraulic inorganic powder to the reinforcing fiber, and water can be an innocuous dissolving agent to dissolve such a preferred binder. For example, if polyethylene oxide is dissolved by an organic solvent, the dissolving agent may include benzene i.e., an oncogenic agent, or acetone which requires heating up to 40 - 60° C, which is disadvantageous. The use of water can avoid those disadvantages.

The term "organic binder solution dispersing a hydraulic inorganic powder " mentioned in relation to each feature of the invention presented in this specification refers to organic binder solution having hydraulic inorganic powder dispersed therein. In watery process, water used for preparing organic binder solution dispersing a hydraulic inorganic powder must be dried out for fear that the hydraulic inorganic powder may harden.

On the other hand, if an organic solvent is used, the fiber-compounded hydraulic reinforcing material must be thoroughly dried during dissolving the agent deprivation process for fear that the residual solvent may interfere with hydration hardening when the fiber-compounded hydraulic reinforcing material as a product is put to use. The organic solvent may be of any kind as long as it can dissolve the organic binder, but, considering the safety of humans and mutual miscibility to water, should preferably include acetone, ethanol for industrial use, isopropyl alcohol, isobutyl alcohol, methylethyl ketone, etc. If a hydrophilic organic solvent is used, a three or more component system combined with water and a hydrophilic organic solvent should preferably be used. Of the binder dissolving agent and dispersant evaporated during the production process, only the organic solvent is separated and recovered for reuse.

In the watery process, the hydraulic inorganic powder hardens in the presence of water of the system, and thus it is necessary to block this reaction. It is possible to block the reaction, for example, by applying the set-retarding means as described above to the system.

The set-retarding means most effectively consists of adding an aggregating activity retarding agent, and such aggregating activity retarders may include followings. Namely, the aggregating activity retarder may include one or more chosen from a group comprising organically dissolving agents, setting retarders and high performnance setting retarders. In manufacture of a fiber-compounded hydraulic reinforcing material, the presence of an aggregating activity retarding agent in the production process will contribute to inhibition of the hydration reaction between the hydraulic inorganic powder and water.

The organic solvent when used as an aggregating activity retarder in the watery process will reduce the proportion of water in a unit volume. Therefore, if it is used in the watery process, it will exert the set-retarding effect by reducing the opportunities of water attacking (hydration reaction) the hydraulic inorganic powder (e.g., cement particles). The ratios of water and an organic solvent in a mixed dissolving agent may be 0 - 99 wt.% in terms of organic solvent/(water + organic solvent) weight ratio, particularly preferably 50 - 90 wt.%.

An setting retarder or an ultra-highly active retarder when used as an aggregating activity retarder in the watery process will exerts its retarding effect by interfering with the adsorption of water to hydraulic inorganic powder (e.g., cement particles), or by forming a complex or chelate compound with hydraulic inorganic powder. Compounds to be used as an setting retarder or an high performnance setting retarder may include, for example, publicly known setting retarders and high performnance setting retarders such as lignin sulfonates, polyoles, naphthalene sulfonates, oxycarbonates, silicon fluorides, etc. Such a compound should preferably be added 0.1 - 5 wt.% in terms of its solid fraction with respect to the weight of hydraulic inorganic powder.

The another admixture to be used in the watery process may include water reducing admixture, air entirying water reducing admixture, high performance water reducing admixture, fluidizers, and/or polymer dispersants for the cement mixture. The admixture may be added at any arbitrarily chosen step of the production process: for example, it may be dissolved or dispersed into water or a mixed dissolving agent comprising water and an organic solvent, or it may be directly added to the dispersion medium. Particularly if a water reducing admixture, an air entirying water reducing admixture, high performance water reducing admixture or fluidizer is used, it will prevent the viscosity of hydraulic inorganic powder from increasing, thereby contributing to the reduction of the use amount of the dispersant.

Of those admixtures described above, it is publicly known that the water reducing admixture and air entirying water reducing admixture can adjust the dispersing activity of hydraulic inorganic powder (e.g., cement particles) by interfering with surface action of the latter with liquid, with the latter's carrying activity of minute air bubbles, or with the hydration reaction of the latter, depending on their chemical nature. The above functions may be chosen as appropriate for a given use.

The high performance water reducing admixture described above has an excellent dispersing activity towards hydraulic inorganic powder (e.g., cement particles), and may include, as publicly known compounds, naphthalene compounds represented by the high formalin condensates of naphthalene sulfonates, melamine compounds or formalin condensates of sulfonated melamine.

The fluidizer is known to have some dispersing and fluidizing activity towards hydraulic inorganic powder (e.g., cement particles).

The polymer dispersant for the cement mixture improves the fluidity of the hydraulic inorganic powder dispersing the organic binder solution, and also serves as an organic binder.

The manner how the organic binder, dissolving agent to dissolve the organic binder, dispersant, setting activity retarder and admixture are used in the watery process can be summarized as in Table 1 below.

**Table 1**

| No. | BINDER | BINDER SOLVENT | DISPERSANT | RETARDER | ADMIXTURE |
|---|---|---|---|---|---|
| 1 | Water Soluble Polymer | Water | Water | Aggregation Retarder, Ultra-highly Active Retarder | (Dehydrator, Fluidizer) |
| | Polymer emulsion | | | | |
| | Polymer dispersant | | | | |
| 2 | id | id | Water + Organic Solvent | Organic Solvent | id |
| 3 | id | id | id | Organic Solvent + Aggregation Retarder or Ultra-highly Active Retarder | id |
| 4 | Other | Organic Solvent | Water + Organic Solvent | Organic Solvent | (Dehydrator, Fluidizer) |
| 5 | id | id | id | Organic Solvent + Aggregation Retarder or Ultra-highly Active Retarder | id |

The method by which the set-retarding means based on a substance other than setting retarders is applied to the watery process consists of preparing hydraulic inorganic powder dispersing the organic binder solution, and applying it to reinforcing fiber before the hydraulic inorganic powder dispersing the organic binder solution has completed hydration to harden.

To put it more specifically, manufacture of a fiber-compounded hydraulic reinforcing material of this invention with water as a dispersant is: (1) to take water as a dispersant, add thereto one or more chosen from a group comprising hydrophilic organic binders and, as needed, setting retarders and high performnance setting retarders, thereby dispersing hydraulic inorganic powder to obtain organic binder solution dispersing a hydraulic inorganic powder; and (2) to apply the organic binder solution dispersing a hydraulic inorganic powder to reinforcing fiber before that binder solution has completed hydration to harden, thereby allowing the binder solution to adhere to the surface of fiber, and/or to impregnate fibers, and then to deprive the reinforcing fiber of water by subjecting it to a drying and/or heating treatment. For this process, the time required for the hydraulic inorganic powder dispersing the organic binder solution to be applied to reinforcing fiber and then dried should preferably be 15 minutes or less, more preferably ten minutes or less, most preferably five minutes or less.

If the dispersion medium includes only water, the most effective binder includes an hydrophilic organic binder chosen from water-soluble polymer binders, emulsions of various polymers, and dispersants of various polymers.

### Short filament-based fiber-compounded hydraulic reinforcing material and its manufacture

A fiber-compounded hydraulic reinforcing material as obtained through the watery or non-watery process may be cut into short fibers of a specific length, to obtain a short fiber-based fiber-compounded hydraulic reinforcing material of this invention. The short fiber-based fiber-compounded hydraulic reinforcing material may be produced at factories and sold as such, or may be prepared at site before use. The preparation may proceed for example as follows: a fiber-compounded hydraulic reinforcing material in the form of continuous fiber is introduced into a hopper, and sprayed onto a mold together with mortar or concrete, while being cut into filaments of a specific length.

### Fiber-infused hydraulic reinforcing material in the form of continuous fiber, unidirectional sheet, fabric, net, unwoven fabric, mat, and Methods for producing the same

The fiber-compounded hydraulic reinforcing material as obtained through the watery or non-watery process of this invention may take following forms and be produced as follows. Namely, it may be a fiber-compounded hydraulic reinforcing material in the form of continuous fiber such as strands, rovings, ropes, braids, etc., and such fiber-compounded hydraulic reinforcing materials may be woven into a unidirectional sheet, fabric, or net. Short fiber-based hydraulic reinforcing materials may be made into a piece of an unwoven fabric or mat.

The fiber-compounded hydraulic reinforcing material in the form of a unidirectional sheet of this invention may be obtained by arranging fiber-compounded hydraulic reinforcing materials in parallel in a direction, keeping them taut, and spreading them into a sheet.

The fiber-compounded hydraulic reinforcing material in the form of ropes of this invention may be obtained by putting together two or more fiber-compounded hydraulic reinforcing materials in the form of strand and twisting them into a cord, and then putting together three to four cords, and twisting them in reverse directions to each other into a rope. It is made with a machine such as a ring-twister, layer, capering, crosser, etc.

The fiber-compounded hydraulic reinforcing material in the form of fabric or net of this invention may be obtained by putting together one or several fiber-compounded hydraulic reinforcing materials in the form of strand or roving, and by knitting or weaving them. Fiber-compounded hydraulic reinforcing materials in the form of strands are placed crosswise one over another, and bound together by binding via, e.g., heating such that organic binder at cross-points fuse to each other to made those reinforcing materials into a flat or cylindrical product.

To obtain a fiber-compounded hydraulic reinforcing material in the form of an unwoven fabric or mat, neat hydraulic reinforcing materials in the form of strand or roving, or chopped strands which will result by cutting the above reinforcing materials are bound together by a physical or chemical method.

The reinforcing material in the form of an unidirectional sheet, fabric, net, unwoven fabric or a mat may be wound into a roll, and the same in the form of a long string such as strand, roving, rope or braid may be wound around a bobbin.

The fiber-compounded hydraulic reinforcing material of this invention which incorporates carbon continuous fibers arranged in parallel in one direction as reinforcing fiber may be manufactured as follows.

The first production method: into the organic binder solution having hydraulic inorganic powder dispersed therein is continuously immersed reinforcing strands arranged in parallel in one direction and pulled by a constant tension, thereby causing the dispersing solution to impregnate strands; then the strands are subjected to a drying or heating treatment, thereby causing the hydraulic inorganic powder to adhere around the reinforcing strands through the organic binder to finally obtain a fiber-compounded hydraulic reinforcing material.

The second production method: into organic binder solution is continuously immersed reinforcing strands tautly arranged in parallel in one direction, thereby causing a layer of organic binder to form on the surface of reinforcing strands; then the strands are allowed to pass through a vessel containing hydraulic inorganic powder, thereby causing the hydraulic inorganic powder to adhere to the layer of organic binder formed on the surface of reinforcing strands; and the strands are subjected to a drying or heating treatment, thereby causing the hydraulic inorganic powder to adhere around the reinforcing strands through the organic binder to finally obtain a fiber-compounded hydraulic reinforcing material.

The third production method: into the organic binder solution having hydraulic inorganic powder dispersed therein is continuously immersed reinforcing strands arranged in parallel in one direction and pulled by a constant tension, thereby causing the hydraulic inorganic powder to adhere to the surface of strands or to impregnate strands; then the strands are subjected to a drying or heating treatment, thereby coating the reinforcing strands and hydraulic inorganic powder with the organic binder to finally obtain a fiber-compounded hydraulic reinforcing material.

The "reinforcing fiber" mentioned in relation to each feature of this invention presented in this specification is not limited to any specific fiber as long as it is high in strength and elastic modulus, excellent in resistance to fire and heat, in durability and in affinity to hydraulic inorganic substances, and its hydraulic inorganic matrix is resistant to strong alkalis, but most may preferably include carbon fiber or carbonaceous fiber.

The "organic binder" mentioned in relation to each feature of this invention presented in this specification should preferably include binders which are capable of temporarily binding hydraulic inorganic powder around reinforcing fiber, easily turn into membranes, give a good result even when used in small amounts, and are inexpensive. Such binders may include, for example, following thermoplastic adhesives, thermosetting adhesives, elastomer adhesives and adhesive compounds mixing each of them, or two or more of them, or their degenerates.

The thermoplastic adhesive and elastomer adhesive are used after they have been dissolved into water and/or organic solvent, emulsified/dispersed, or turned into a colloid, to serve as a binder. Monomers to form a thermosetting adhesive, or oligomers and prepolymers having a low viscosity are used neat or after having been dissolved into an organic solvent as needed to serve as a binder.

The thermoplastic adhesive may include, for example, polyethylene, polypropylene, polyamide, polymethylmethacrylate, polystylene, methylcyanoacrylate, polybutadiene, polybenzoimidazole, polyparaphenyloxide, polycarbonate, polyacetal, ABS, polyethylenetelephthalate, polyvinyl acetate, ethylene-vinyl acetate copolymer, vinyl propionate, chlorinated polypropylene, polyvinyl chloride, polyvinylidene chloride, polyparavinyl phenol, polyvinyl ether, polyvinyl butylal, polyvinyl formal, ketone resins, isobutylene-anhydrous maleic acid copolymer, polyethylene oxide, methyl cellulose, hydroxypropylmethyl cellulose, carboxymethyl cellulose, polyvinyl alcohol, organic solvent-soluble polyvinyl alcohol, polyurthane, polyester polyol, polyisocyanate, etc.

The thermosetting adhesive may include epoxy, polyurethane, unsaturated polyester, vinylester, acryl, etc.

The elastomer adhesive may include natural rubber, butadiene rubber, stylene/butadiene rubber, nitoril/butadiene rubber, isoprene rubber, chloroprene rubber, urethane rubber, butyl rubber, silicone rubber, etc.

The "organic binder" may include water insoluble and organic solvent soluble binders, and water dispersive or soluble binders. The organic binder belonging to the latter category may include hydrophilic organic binders such as water soluble polymer binders, emulsions of various polymers, and dispersants of various polymers. A fiber-compounded hydraulic reinforcing material based on the use of the water-insoluble organic binder is advantageous in that, when exposed to water, deciduous of powder can be prevented. On the other hand, the hydraulic reinforcing material based on the use of the water-dispersable or water-soluble organic binder is advantageous in that, when exposed to water, its coat is dissolved, carbon fiber is moderated in setting, and its dispersibility is improved. In this invention, an appropriate binder may be chosen according to the nature of a given object requiring reinforcement. A binder soluble to the organic solvent and another binder dispersible or soluble to water may be mixed for use.

As an example a case where a fiber-compounded hydraulic reinforcing material in the form of cord or sheet of this invention is to be wound around a columnar body for reinforcement. If the organic binder is water-soluble, it will dissolve in the presence of water, and the hydraulic inorganic powder fall. This is inconvenient. To meet such a case, use of an organic binder insoluble to water and soluble to the organic solvent should be preferred. On the contrary, if a fiber-compounded hydraulic reinforcing material has to be put into the concrete slurry to strengthen the slurry, use of an organic binder soluble to water should be preferred because then the hydraulic inorganic powder contained in the reinforcing material will become appropriately dispersive.

The "organic binder dispersant" mentioned in relation to each feature of this invention presented in this specification refers to the organic binder solution having hydraulic inorganic powder dispersed therein. If an organic solvent is used for preparing an organic binder dispersant, it is necessary to thoroughly dry the fiber-compounded hydraulic reinforcing material for fear that residual water may interfere with hardening of hydraulic inorganic powder. The organic solvent is not limited to any specific agent as long as it can dissolve the organic binder, but may preferably include acetone, ethanol for industrial use, isopropyl alcohol, isobutyl alcohol, methylethyl ketone, because of their being innocuous to human safety. The organic solvent evaporated while the production process is recovered for reuse.

The addition of water for hardening hydraulic inorganic powder must be adjusted appropriately according to the amount of hydraulic inorganic powder contained in a given reinforcing material: for the cement-based reinforcing material, the water/cement ratio should be adjusted to 20 - 60 wt.%, most preferably to 25 - 45 wt.%.

Further, various admixtures such as water reducing admixture or high performance water reducing admixture, setting accelerators or setting retarders, or dry shrinkage control agent may also be added, and a polymer dispersant for the cement mixture may be used instead of water.

The high performance water reducing admixture may include formalin condensates of a naphthalene sulfonate, formalin condensate of sulfonated melamine, etc., and refers to compounds which improve the dispersibility of cement particles in water, thereby reducing the necessary amount of water for kneading.

With regard to the fiber-compounded hydraulic reinforcing material of this invention, when it is given water at the construction site, hydraulic inorganic powder serving as a matrix hydrates, and then hardens. The fiber-compounded hydraulic reinforcing material can be preserved over a long period as long as it is wrapped in a moisture proof material so as to prevent it from hardening in the presence of moisture in the air.

With the fiber-compounded hydraulic reinforcing material of this invention, because the majority of its constituents are inorganic, it is excellent in resistance to fire and heat, and in adherence to mortar and concrete. Hence, it will not catch fire even if the building to which it is applied is burnt by fire, and thus it does not require a fireproof or resistant coat thereupon. Moreover, the adherence of an inorganic substance to another inorganic substance will make it unnecessary to resort to a priming treatment at site. With the fiber-compounded hydraulic reinforcing material of this invention, because the majority of its constituents are inorganic, it is excellent in resistance to fire and heat, and in adherence to mortar and concrete. Hence, it will not catch fire even if the building to which it is applied is burnt by fire, and thus it does not require a fireproof or resistant coat thereupon. Moreover, the adherence of an inorganic substance to another inorganic substance will make it unnecessary to resort to a priming treatment at site. The fiber-compounded hydraulic reinforcing material of this invention is so light in weight and excellent in drape that workability related to installment of crosswise reinforcing rods is markedly improved and still the force resisting the activity of the construction will not be impaired because of this even if the construction is burnt by fire. Further, if it is dispersed evenly in mortar or concrete, in place of conventional reinforcing fiber in the form of chopped strands, no void will develop in concrete, and thus the strength of reinforcing fiber will easily develop fully in the resulting composite material.

### II. The Means to Achieve the Second Object of This Invention

The means to achieve the second object of this invention is as follows.

### Hardening fiber-compounded reinforcing material

The hardening fiber-compounded reinforcing material for achieving the second object of this invention contains at least constitutive elements [A], [B] and [C] as mentioned below, and is characterized in that a flexible hydraulic compound (this is the same with "a fiber-compounded hydraulic reinforcing material") resulting from binding of elements [C] to [A] through element [B] hardens as a result of hydration.
[A]: Reinforcing fiber
[B]: Organic binder
[C]: Unhardened and dried hydraulic inorganic powder

With the hardening fiber-compounded reinforcing material of this invention, the weight ratio of the organic binder with respect to hydraulic inorganic powder should preferably be kept as small as possible, when resistance to fire of the yield is considered. But if it were too small, hydraulic inorganic powder would not adhere to reinforcing strands or hardly impregnate strands, and thus it would not function as a matrix, and the strength of the yield would decline. Considering these factors, the ratio of the organic binder or element [B] against the total weight including the weights of elements [A], [B] and [C] should preferably be 0.1 - 40% vol.%.

The hardening fiber-compounded reinforcing material of this invention has, as a precursor, a fiber-compounded hydraulic reinforcing material as described in paragraph I as a hydraulic compound, and is obtained when that precursor is allowed to hydrate to harden. Because this precursor is flexible, it can be molded into any desired shape before it is hydrated for hardening, and thus it turns into a fiber-compounded reinforcing body taking the desired shape. For example, a hydraulic compound, or a laminated or conglomerate body comprising one or more such hydraulic compounds could be molded into any desired shape to give a fiber-compounded reinforcing body taking the desired shape.

The manufacture of a hydraulic compound serving as a precursor may consist of applying hydraulic inorganic powder dispersing the organic binder solution to reinforcing fiber. The hydraulic inorganic powder dispersing the organic binder solution is obtained by dispersing hydraulic inorganic powder in the organic binder solution. If an organic solvent is used for preparing hydraulic inorganic powder dispersing the organic binder solution, it is necessary to thoroughly dry the resulting hydraulic compound for fear that residual solvent may interfere hardening of the hydraulic inorganic powder.

The precursor of hardening fiber-compounded hydraulic reinforcing material of this invention may take such a form as strands, rovings, ropes, braids, a unidirectional sheet, fabric, net, unwoven fabric or mat. The hardening fiber-compounded reinforcing material of this invention obtained by hardening the precursor may take the same form as what the hydraulic compound takes. It may be obtained by choosing one or more from those hydraulic compounds, and turning them into a laminated or conglomerate body comprising plural layers or masses, and causing the body to hydrate for hardening.

The hardening fiber-compounded reinforcing material of this invention may be in the form of short fibers. Such a hardening fiber-compounded reinforcing material in the form of short fibers may be obtained by cutting the flexible hydraulic compound in the form of rovings into chopped strands, and causing the chopped strands to hydrate for hardening. To prepare some hardening fiber-compounded reinforcing material in the form of short fibers, a hydraulic compound in the form of strands or rovings may be cut before it hydrates for hardening, or after it has hardened as a result of hydration. A flexible hydraulic compound in the form of short fibers may be molded into any desired shape while undergoing hydration for hardening, to serve as some hardening fiber-compounded reinforcing material.

The hydraulic compound serving as a precursor of the hardening fiber-compounded reinforcing material of this invention turns into some hardening fiber-compounded reinforcing material of this invention after water has been given to it at site before use or to prepare a product therefrom at a factory, thereby causing hydraulic inorganic powder forming matrix to hydrate for hardening.

The time when water is given for causing a hydraulic compound to hydrate for hardening may fall, if the hydraulic compound is a laminated or conglomerate body, before or after lamination or conglomeration takes place, and, if the hydraulic compound must be cut, before or after cutting takes place. Hydraulic compounds may be laminated or conglomerated before the mold or mandril is wetted, or water may be given to them after they have been set into the mold or mandril.

Water for hardening hydraulic inorganic powder should be given in an appropriate amount according to the content of hydraulic inorganic powder of a given hydraulic compound. For example, for a cement-based compound, water should be preferably given to provide the water/cement ratio of 20 - 60 wt.%, or most preferably 25 - 45 wt.%.

For manufacture of a hardening fiber-compounded reinforcing material of this invention, to cause hydration for hardening, water including various admixtures such as water reducing admixture, high performance water reducing admixture, setting accelerators, setting retarders, dry shrinkage control agent, etc. may be used. A polymer dispersant for the cement mixture may be used instead of water.

The high performance water reducing admixture here refers to naphthalene compounds represented by formalin condensates of naphthalene sulfonates, or formalin condensates of sulfonated melamins, that is, agents which improve the dispersing activity of cement particles in water, and enable the economical use of kneading water.

The polymer dispersant for cement mixture here refers to what is defined by JIS A 6203, that is, materials in which polymer particles (0.05 - 5 µm) evenly suspend in water, and cause, when mixed with cement, hydration of cement and formation of a polymer to proceed simultaneously, to produce a network matrix where cement gel and polymer phase are intertwined into a mass.

The hardening fiber-compounded reinforcing material of this invention may be used as a reinforcing material when a structural element is required to serve as a component structure of a construction in the field of, for example, architecture, construction, exteriors, etc., or when hardening products are manufactured in other various fields.

The examples of where the hardening fiber-compounded reinforcing material of this invention is utilized as a structural element may include highly strong panels, curtain wall, partition wall, materials of the dome ceiling, protection pipes of communication cables, pipes, etc. Examples of the use in other industrial fields may include the muffler cover of motorcycles because of its high resistance to heat, and sandbags which are obtained by filling bags of fabric or net made of a hydraulic compound with sand, and hydrating the bags for hardening.

Because the hardening fiber-compounded reinforcing material of this invention is largely made of inorganic substances, it is excellent in resistance to fire and heat, and in durability.

Because the hardening fiber-compounded reinforcing material of this invention comprises hydraulic inorganic powder hardened around reinforcing fiber, it has the high affinity with the cement-based slurry, and highly adhesive to a cement-based hardening object even when it is inserted under or applied onto the latter.

### III. The Means to Achieve the Third Object of This Invention

The means to achieve the third object of this invention relates to a reinforcing/repairing method, and reinforcing/repairing structure based on the use of the fiber-compounded hydraulic reinforcing material of this invention, and, according to the mode in which the fiber-compounded hydraulic reinforcing material is applied to the surface requiring treatment, is classified to Affixing Method, Underlaying Method and Spraying Method.

### i) Affixing Method

A reinforcing/repairing method based on affixing to achieve the third object of this invention employs at least constitutive elements [A], [B] and [C] as mentioned below, and consists of taking a fiber-compounded hydraulic reinforcing material which is flexible before it contacts with water, but hardens in the presence of water, applying it onto the surface of a construction requiring treatment, and causing the fiber-compounded hydraulic reinforcing material to hydrate for hardening while keeping it on the application surface.
[A]: Reinforcing fiber
[B]: Organic binder
[C]: Unhardened and dry hydraulic inorganic powder

The reinforcing/repairing method of this invention based on affixing which consists of causing a fiber-compounded hydraulic reinforcing material to hydrate for hardening on the surface of a construction requiring treatment should preferably comprise one or more chosen from following methods (1) to (3).
(1) Process in which the application surface is wetted in advance and then a fiber-compounded hydraulic reinforcing material is applied thereupon.
(2) Process in which a fiber-compounded hydraulic reinforced material is applied onto the application surface, and then water is sprayed thereupon.
(3) Process in which water is given to a fiber-compounded hydraulic reinforcing material and then the material is applied onto the application surface.

Of the reinforcing/repairing method of this invention based on affixing, process in which a fiber-compounded hydraulic reinforcing material is applied onto the application surface of a construction consists of leaving the surface as it is, or applying to the surface water, polymer dispersant for the cement mixture, cement mortar, or polymer cement mortar, and then applying a fiber-compounded hydraulic reinforcing material thereto.

The reinforcing/repairing method of this invention based on affixing is characterized in that a fiber-compounded hydraulic reinforcing material resulting from combination of reinforcing fiber, an organic binder, and unhardened and dry hydraulic inorganic powder is caused to hydrate for hardening while being placed on the application surface, thereby integrating itself with the latter.

The fiber-compounded hydraulic reinforcing material to used for the reinforcing/repairing method of this invention is mainly composed of inorganic components, and thus a construction reinforced/repaired with this hydraulic reinforcing material is excellent in resistance to fire and heat, and dispenses with the use of a fireproof or fire resistant coat. Moreover, because the fiber-compounded hydraulic reinforcing material used for the reinforcing/repairing method of this invention contains a hydraulic inorganic powder component itself, it is so adhesive to constructions that it wilt not require a priming treatment, thereby making it possible to simplify production processes and lower the construction cost.

Further, because the fiber-compounded hydraulic reinforcing material used for the reinforcing/repairing method of this invention does not contain water during transportation or at a certain time before use, then it is light in weight and excellent in workability. Furthermore, the fiber-compounded hydraulic reinforcing material used for the reinforcing/repairi ng method of this invention is far lighter in weight than a steel plate conventionally used for such reinforcing/repairing, the increment of dead weight will be far better suppressed. This is an advantage.

The method of reinforcing/repairing some existent concrete or steel construction by the use of a fiber-compounded hydraulic reinforcing material consists of removing by abrasion a coat composed of laitance, efflorescence, dust, oil and paint for a concrete construction, or of removing by the high pressure spray scrubbing a coat composed of dust, rust, oil, and paint for a steel construction; of winding or applying the hydraulic reinforcing material around or to the construction: and of causing the hydraulic inorganic component of the reinforcing material to hydrate for hardening. If the application surface of a construction has corners, the corners should be rounded off by abrasion or through application of cement mortar, polymer cement mortar, or putty as needed, and then treated by the hydraulic reinforcing material.

Water for hydrating the hydraulic inorganic component may be applied in advance to the application surface before a fiber-compounded hydraulic reinforcing material is applied thereto; or may be sprayed over the application surface, after a fiber-compounded hydraulic reinforcing material has been applied to or wound around the surface; or may be added to a fiber-compounded hydraulic reinforcing material before that material is applied to the application surface. It is also possible to take any two of the above three methods to combine them for use. It is also possible to apply a fiber-compounded hydraulic reinforcing material to the application surface, and then to cover the heap with cement mortar or polymer cement mortar.

With the method of reinforcing/repairing constructions of this invention, it is also possible to apply polymer cement mortar containing a polymer dispersant for the concrete mixture, cement mortar or polymer dispersant for the cement mixture to the application surface, and then to apply a hydraulic reinforcing material to harden.

The polymer dispersant for the cement mixture here may include those defined by JIS A 6203 as mentioned earlier.

It is also possible to apply in addition as needed a polymer dispersant for cement mixture, or a polymer cement mortar containing cement mortar or a polymer dispersant for the cement mixture onto the layer each time a layer of a hydraulic reinforcing material has been formed over or wound around the application surface. For lamination, it is recommended to spread the hydraulic reinforcing material over the application surface with a roller, thereby discharging air contained in that material and insuring close contact.

The addition of water for hardening hydraulic inorganic powder must be adjusted appropriately according to the amount of hydraulic inorganic powder contained in a given reinforcing material: for the cement-based reinforcing material, the water/cement ratio should be adjusted to 20 - 60 wt.%, most preferably to 25 - 45 wt.%.

Further, various admixtures such as water reducing admixture or high performance water reducing admixture, setting accelerators or setting retarders, or dry shrinkage control agent may also be added, and a polymer dispersant for the cement mixture may be used instead of water.

The high performance water reducing admixture may include formalin condensates of a naphthalene sulfonate, formalin condensate of sulfonated melamine, etc., and refers to compounds which improve the dispersibility of cement particles in water, thereby reducing the necessary amount of water for kneading.

It is also possible to apply a fiber-compounded hydraulic reinforcing material to the surface of a construction, and to overlay a layer of an inorganic hardening substance such as mortar thereupon.

The constructions to which the reinforcing/repairing based on the use of a fiber-compounded hydraulic reinforcing material of this invention may be applied may include general roads, particularly floor plates of the elevated parts of roads and the piers of a bridge, the ceiling and walls of a tunnel, dam, water conduits, constructs including river constructions and ocean constructions, general buildings, etc.

Particularly because tunnels and dams, water conduits, and constructs such as a river and ocean constructions are always exposed to moisture, epoxy resins have been useless for their reinforcement/repair. However, with the reinforcing/repairing method of this invention, the fiber-compounded hydraulic reinforcing material hardens in the presence of moisture, and thus the surface treated by the fiber-compounded hydraulic reinforcing material is excellent in hardening and adhesive properties.

For the method of reinforcing/repairing a construction by affixing a hydraulic reinforcing material thereto as described above, explanation is exclusively directed to the use of a fiber-compounded hydraulic reinforcing material. But the same material already hardened can be used to reinforce/repair a construction. This forms another reinforcing/repairing method based on affixing method of this invention. This method is based on the use of at least following constitutive elements [A], [B] and [C] as mentioned below, and characterized in that a flexible hydraulic compound resulting from the combination of elements [A] and [C] through element [B] hardens as a result of hydration.
[A]: Reinforcing fiber
[B]: Organic binder
[C]: Unhardened and dried hydraulic inorganic powder

### ii) Underlaying Method

The method to achieve the third object of this invention for reinforcing/repairing a construction or natural object based on underlaying is: (1) to take at least following constitutive elements [A], [B] and [C],
[A]: Reinforcing fiber;
[B]: Organic binder; and
[C]: Unhardened and dried hydraulic inorganic powder,
therefrom preparing a fiber-compounded hydraulic reinforcing material which results after [A] and [C] have been combined through [B], is flexible before it contacts with water, and hardens in the presence of water, and to apply the neat hydraulic reinforcing material onto the application surface of a construction or natural object, or onto the same surface which has received a precoat; (2) to heap and/or spray concrete slurry around the hydraulic reinforcing material, thereby underlaying the hydraulic reinforcing material to hydrate there; and (3) to cause the hydraulic reinforcing material and the concrete slurry to harden concurrently to form a unified mass.

The structure for reinforcing/repairing a construction or the natural object generated by the method based on underlaying of this invention is established when a fiber-compounded hydraulic reinforcing material in which reinforcing fiber, an organic binder, and unhardened and dry hydraulic inorganic powder have been combined is laid under a covering of the concrete slurry over the surface of a construction or natural object requiring reinforcing/repairing, and hydrated, and thus the fiber-compounded hydraulic reinforcing material and the concrete slurry have hardened together into a unified mass.

In this invention, the fiber-compounded hydraulic reinforcing material to be applied to the surface of a construction or natural object requiring reinforcing/repairing should preferably take one, or a combination of two or more from following (1) to (4) options.
(1) Fiber-infused hydraulic reinforcing material in the form of one or more chosen from strands, rovings, ropes and braids.
(2) Fiber-infused hydraulic reinforcing material in the form of fabric or net.
(3) Fiber-infused hydraulic reinforcing material in the form of the unwoven fabric or mat.
(4) Fiber-infused hydraulic reinforcing material in the form of sheet obtained by modifying a fiber-compounded hydraulic reinforcing material belonging to category (1).

Specification of such a hydraulic reinforcing material to the surface of a construction or natural object requiring reinforcing/repairing may take place not only by placement or application but also by winding the material around the surface requiring reinforcement/repair.

The term "concrete slurry" mentioned in relation to each feature of this invention presented in this specification refers to various kinds of cement, sand, and pebbles which are mixed with water and remain unhardened.

Concrete slurry to lie over a fiber-compounded hydraulic reinforcing material may contain any reinforcing fibrous materials usually used for conventional purposes. It may also contain the fiber-compounded hydraulic reinforcing material in the form of short fibers. A particularly preferred short fibers fiber-compounded hydraulic reinforcing material can be obtained by cutting a fiber-compounded hydraulic reinforcing material in the form of strands into short fibers. The concrete slurry may further contain, in addition to reinforcing fiber, various admixtures for the concrete mixture.

If a precoat material is applied onto the surface of a construction or natural object requiring reinforcing/repairing before a fiber-compounded hydraulic reinforcing material is applied to that surface, the precoat may be made of one chosen from polymer dispersants for the cement mixture or polymer cement mortar slurry, cement mortar slurry, and cement concrete slurry.

The fiber-compounded hydraulic reinforcing material used in this invention is largely composed of incombustible inorganic substances, and thus a construction which has been reinforced/repaired by the use of such a hydraulic reinforcing material is excellent in resistance to fire and heat.

Moreover, the fiber-compounded hydraulic reinforcing material used in the reinforcing/repairing method of this invention is excellent in adhesiveness to concrete and slurry.

Further, because the fiber-compounded hydraulic reinforcing material used for the reinforcing/repairing method of this invention is far lighter in weight and more excellent in workability than the conventional material based on iron rods, and more excellent in durability because of its not developing rust.

Overlaying or spraying the concrete slurry may take place in a mold which is prepared in advance.

The addition of water for hardening hydraulic inorganic powder must be adjusted appropriately according to the amount of hydraulic inorganic powder contained in a given hydraulic reinforcing material: for the cement-based reinforcing material, the water/cement ratio should be adjusted to 20 - 60 wt.%, most preferably to 25 - 45 wt.%.

Water for hardening hydraulic inorganic powder is usually represented by water oozing from the concrete slurry. However, the surface requiring reinforcing/repairing may be wetted in advance with water with a view to transfer the water to a hydraulic reinforcing material, and then a hydraulic reinforcing material may be applied thereto. A hydraulic reinforcing material may be applied to the surface requiring reinforcing/repairing, and then water be sprayed thereto. A hydraulic reinforcing material given water in advance may be applied to the surface requiring reinforcing/repairing.

Further, various admixtures such as water reducing admixture or high performance water reducing admixture, setting accelerators or setting retarders, or dry shrinkage control agent may also be added as needed, and a polymer dispersant for the cement mixture may be used instead of water.

The high performance water reducing admixture may include formalin condensates of a naphthalene sulfonate, formalin condensate of sulfonated melamine, etc., and refers to compounds which improve the dispersibility of cement particles in water, thereby reducing the necessary amount of water for kneading.

The constructions to which the reinforcing/repairing based on the use of a fiber-compounded hydraulic reinforcing material of this invention may be preferably applied may include general roads, particularly floor plates of the elevated parts of roads and the piers of a bridge; the ceiling and walls of a tunnel; dam; water conduits; constructs including river constructions, water-front/ocean constructions, and underground constructions; general buildings; the steepest slope of a cliff; rocks, etc.

Particularly because tunnels and dams, water conduits, and constructs such as river constructions and water front/ocean constructions are always exposed to moisture, conventional reinforcing/repairing materials such as epoxy resins have been useless for their reinforcement/repair. However, with the reinforcing/repairing method of this invention, the fiber-compounded hydraulic reinforcing material hardens in the presence of moisture, and thus the surface treated by the fiber-compounded hydraulic reinforcing material is excellent in hardening and adhesive properties.

For the method of reinforcing/repairing a construction by underlaying a hydraulic reinforcing material as described above, explanation is exclusively directed to the use of a fiber-compounded hydraulic reinforcing material. But the same material already hardened can be used to reinforce/repair a construction. This forms another reinforcing/repairing method based on underlaying of this invention. This method is: (1) to take a flexible hydraulic compound containing at least following constitutive elements [A], [B] and [C],
[A]: Reinforcing fiber,
[B]: Organic binder, and
[C]: Unhardened and dried hydraulic inorganic powder,
and combining elements [A] and [C] through element [B], to cause the compound to hydrate for hardening, and to apply the hardened fiber-compounded reinforcing material to the application surface of a construction or natural object, or to apply the same material onto the application surface having received a precoat; (2) to heap and/or spray concrete slurry over the reinforcing material, thereby underlaying the reinforcing material; and (3) to cause the concrete slurry to harden to integratively unite with the reinforcing material.

### iii) Spraying process

The method to achieve the third object of this invention for reinforcing/repairing a construction or natural object based on underlaying is: to take a fiber-compounded hydraulic reinforcing material which contains at least following constitutive elements [A] or reinforcing fiber, [B] or an organic binder and [C] or unhardened and dry hydraulic inorganic powder, has elements [A] and [C] combined through element [B], is flexible before it contacts with water, and hardens in the presence of water, and to cause the reinforcing material to harden concurrently with the cement-based slurry on the application surface of a construction or natural object to form a unified mass.

To put it more concretely, the present method for reinforcing/repairing a construction or the natural object based on spraying may include following variations.

The first variation is based on direct spraying in which cement-based slurry and a hydraulic reinforcing material are independently and concurrently sprayed: (1) a fiber-compounded hydraulic reinforcing material in the form of continuous fiber is prepared which contains at least following constitutive elements [A] or reinforcing fiber, [B] or an organic binder and [C] or unhardened and dry hydraulic inorganic powder, has elements [A] and [C] combined through element [B], is flexible before it contacts with water, and hardens in the presence of water; and (2) spraying the fiber-compounded hydraulic reinforcing material while cutting it into short fibers, and concurrently or alternately cement-based slurry onto the application surface of a construction or the natural object takes place such that the fiber-compounded hydraulic reinforcing material in the form of short fibers and the cement-based slurry harden together to form a unified mass.

The second variation is based on so-called premixing in which fiber-compounded cement-based slurry has been prepared: (1) a fiber-compounded hydraulic reinforcing material in the form of short fibers is prepared which contains at least following constitutive elements [A] or reinforcing fiber, [B] or an organic binder and [C] or unhardened and dry hydraulic inorganic powder, has elements [A] and [C] combined through element [B], is flexible before it contacts with water, and hardens in the presence of water; (2) the short fibers fiber-compounded hydraulic reinforcing material is mixed together with cement, aggregate and water, and the resulting mass is kneaded to give the fiber-compounded cement-based slurry; (3) the fiber-compounded cement-based slurry is sprayed onto the surface of a construction or natural object requiring reinforcing/repairing, thereby causing the short fibers fiber-compounded hydraulic reinforcing material and cement-based slurry to harden concurrently, to form a unified mass.

The structure for reinforcing/repairing a construction or the natural object generated by the method based on spraying of this invention is established when a short fibers fiber-compounded hydraulic reinforcing material in which reinforcing fiber, an organic binder, and unhardened and dry hydraulic inorganic powder have been combined is allowed to disperse into the concrete slurry over the surface of a construction or natural object requiring reinforcing/repairing, and hydraulic inorganic powder of the fiber-compounded hydraulic reinforcing material and concrete slurry hydrate together to harden and integratively unite with the underlaying construction or natural object.

If the short fibers fiber-compounded hydraulic reinforcing material of this invention is used in premixing, hydraulic inorganic powder contained therein will have a high affinity with the concrete slurry and individual filaments will easily separate from each other during kneading because hydraulic inorganic powder has been bound to reinforcing filaments through an organic binder. Moreover, because hydraulic inorganic powder infiltrating between filaments serves as a matrix, it will harden with the cement-based slurry to form a unified mass. Accordingly, voids due to insufficient infiltration by the cement-based slurry will not develop and thus strength reduction as a result of concentrated stresses will not arise.

If the short fibers fiber-compounded hydraulic reinforcing material of this invention is used for direct spraying, filaments will not blow up from the surface even if the reinforcing filaments are violently rubbed during passage through the guides of a hopper, because the reinforcing filaments are protected by binder films. However, it is difficult to insure, during spraying, the clean separation of individual filaments and their even distribution in the cement-based slurry. Even if individual filaments are not sufficiently separated during kneading with the cement-based slurry, voids due to insufficient infiltration by the cement-based slurry will not develop because reinforcing filaments have been thoroughly impregnated by hydraulic inorganic powder, and thus strength reduction as a result of concentrated stresses will not arise.

The cement-based slurry used in this invention refers to mortar the slurry or concrete slurry, while the cement-based hardened substance to what is obtained by hardening slurry.

The time when a fiber-compounded hydraulic reinforcing material in the form of continuous fiber is cut may vary depending on the method how the resulting short fibers fiber-compounded hydraulic reinforcing material and cement-based slurry are put together. For premixing, a fiber-compounded hydraulic reinforcing material in the form of continuous fiber may be cut in advance into short fibers. For direct spraying, a short fibers fiber-compounded hydraulic reinforcing material may be cut during spraying of the cement-based slurry.

### The application of a short fibers fiber-compounded hydraulic reinforcing material to a construction or natural object

Application of a short fibers fiber-compounded hydraulic reinforcing material to a construction or the natural object may take place by Premixing Method or Direct Spraying Method as detailed below.

### (a) Premixing Method

A short fibers fiber-compounded hydraulic reinforcing material is mixed with cement, aggregate, water and various admixtures, thereby causing the reinforcing material to disperse into the cement-based slurry such as a mortar slurry or concrete slurry, and the resulting mass is sprayed onto the surface of a construction or natural object requiring reinforcement/repair, or is poured into a mold prepared in advance. For mixing various components, a general purpose concrete mixer may be used.

Because the short fibers fiber-compounded hydraulic reinforcing material used in this invention has hydrophilic, hydraulic inorganic powder impregnated between individual reinforcing filaments, those filaments tend to separate from each other during kneading.

Moreover, even if individual filaments are not completely separated during kneading thereof with the cement-based slurry, voids will not develop in matrix because reinforcing filaments have been thoroughly impregnated by hydraulic inorganic powder, and thus strength reduction as a result of concentrated stresses will not arise.

### (b) Direct Spraying Method

A fiber-compounded hydraulic reinforcing material in the form of continuous fiber is introduced into a hopper gun including a cutting apparatus such as a rotary cutter, and, while being cut into short fibers therewith, it is sprayed onto the application surface of a construction or natural object, concurrently or alternately with spraying of cement-based slurry, thereby causing the short fiber-compounded hydraulic reinforcing material and cement-based slurry to harden together to form a unified mass. For this operation, a mold may be placed around the surface requiring reinforcement/repair. The short fiber-compounded hydraulic reinforcing material, even applied by direct spraying, insures a high strength because it has hydraulic inorganic powder impregnated individual reinforcing filaments.

The addition of water for hardening hydraulic inorganic powder must be adjusted appropriately according to the amount of hydraulic inorganic powder contained in a given short fiber-compounded hydraulic reinforcing material: for the cement-based reinforcing material, the water/cement ratio should be adjusted to 20 - 60 wt.%, most preferably to 25 - 45 wt.%.

The constructions to which the reinforcing/repairing based on spraying or placing of a fiber-compounded hydraulic reinforcing material of this invention may be preferably applied may include various general buildings, particularly pillars, beams and walls; building-attached constructions such as stacks; roads, particularly their paved surface, floor plates of the elevated part of a road and the piers of a bridge; the ceiling and internal walls of a tunnel; dam; water conduits; constructs including river constructions, water-front/ocean constructions, and underground constructions; etc.

Particularly because tunnels and dams, water conduits, and constructs such as river constructions and water front/ocean constructions, and underground constructions are always exposed to moisture, conventional reinforcing/repairing materials such as epoxy resins have been useless for their reinforcement/ repair. However, with the reinforcing/repairing method of this invention, the fiber-compounded hydraulic reinforcing material hardens in the presence of moisture, and thus the surface treated by the fiber-compounded hydraulic reinforcing material is excellent in hardening and adhesive properties.

The reinforcing/repairing method of this invention based on spraying may be applied to reinforce a construction as finish, or to reinforce/repair an existent construction or natural object.

The fiber-compounded hydraulic reinforcing material used in the reinforcing/repairing method of this invention is largely composed of hydraulic inorganic substances, and thus a construction which has been reinforced/repaired by the use of such a hydraulic reinforcing material is excellent in resistance to fire and heat.

Moreover, the fiber-compounded hydraulic reinforcing material used in the reinforcing/repairing method of this invention is excellent in adhesiveness to concrete and slurry because it contains hydraulic powder component itself.

### IV. Means to Achieve the Fourth Object of This Invention

The "structural element" to achieve the fourth object of this invention refers to a prefabricated material to serve as a component structure of a building or construction, and may include, as representative examples, interior/exterior materials, curtain wall, permanent moldes, free access floor, side-supporting materials, various exterior materials, etc.

The means by which to achieve the fourth object of this invention is classified as follows depending on whether reinforcing fiber to which it is applied comprise continuous fiber or short fibers.

### i) Structural element to be applied to hydraulic reinforcing materials in the form of continuous fiber

The structural element, that is, a fiber-reinforced cement-based hardened substance incorporating reinforcing the continuous fiber of this invention has a feature that it is reinforced by a fiber-compounded hydraulic reinforcing material having hydraulic inorganic powder bound to reinforcing fiber through an organic binder which is buried in hardening state below a hardened cement-based substance which also serves as a component of the structual element, or applied thereupon, thereby reinforcing that cement-based substance.

Another structural element, that is, another fiber-reinforced cement-based hardened substance incorporating reinforcing the continuous fiber of this invention has a feature that it is reinforced by a fiber-compounded hydraulic compound (refers to the same with a hydraulic reinforcing material) having hydraulic inorganic powder bound to reinforcing fiber through an organic binder which is buried in hardening state below a hardened cement-based substance which also serves as a component of the structual element, or applied thereupon, thereby reinforcing that cement-based substance.

### The manufacture of structural element

A fiber-compounded hydraulic reinforcing material in the form of one or more chosen from sheet, strands, rovings, unidirectional sheet, rope, braid, fabric, net, unwoven fabric and mat, or its hardened product is placed in a mold; cement-based slurry is poured into the mold; and hydraulic inorganic powder and cement-based slurry are caused to harden together to form a unified mass.

Placing the cement-based slurry into a mold for molding may take place by spraying (spray molding) or by placing (pour molding), or by pressing (press molding) after slurry has been sprayed or poured into a mold. During this operation, it is necessary to extract by suction excess water generated as a result of the hardening process of the cement-based slurry.

Another method for producing the structural element of this invention, that is, a fiber-reinforced cement-based hardened product consists of continuously introducing a fiber-compounded hydraulic reinforcing material in the form of continuous fiber into an extruder (e.g., cross-head extruder); of continuously extruding from the outlet a mold comprising the fiber-compounded hydraulic reinforcing material embedded in the cement slurry while feeding cement-based slurry into the extruder; and of cutting the mold into pieces of a specific length for hardening, or of hardening the mold to cut it into pieces of a specific length. A fiber-compounded hydraulic reinforcing material in the form of strips may be added to the cement-based slurry.

The structural element of this invention comprising a fiber-compounded cement-based hardened product may contain, in addition to above constitutive elements, a short fiber-compounded hydraulic reinforcing material or other short fiber reinforcing materials which cause hydraulic inorganic powder to bind to reinforcing filaments through an organic binder in the cement-based hardened product.

Incidentally, for all the methods of producing the structural element mentioned above, cement-based slurry may contain a short fiber-compounded hydraulic reinforcing material.

Because the fiber-compounded hydraulic reinforcing material incorporated in the structural element of this invention comprising a fiber-reinforced cement-based hardened product has hydraulic inorganic powder bound to or infiltrating into reinforcing fiber, it has high affinity with the cement-based slurry. Moreover, because the hydraulic inorganic powder infiltrating into reinforcing fiber serves as a matrix, it integratively unites with the cement-based slurry to harden.

The cement-based slurry used for manufacture of the structural element of this invention comprising a fiber-reinforced cement-based hardened product refers to mortar the slurry or concrete slurry, while the cement-based hardened product to what is obtained by hardening slurry.

Reinforcing fiber, an organic binder and unhardened and dry hydraulic inorganic powder used as starting materials of the structural element of this invention comprising a fiber-reinforced cement-based hardened product is the sane with those mentioned in relation to other features of this invention presented in this specification.

### The application of the structural element

The structural element comprising a fiber-reinforced cement-based hardened product manufactured according to the method of this invention can be applied in various fields including architecture, construction, exteriors, and others.

The structural element comprising a fiber-reinforced cement-based hardened product applicable to architecture may include, for example, interior/exterior materials, curtain wall, window-frame unit, parapet, ceiling materials, spandrel, pillar cover, beam cover, screen panel, ply wood, soundproof wall, railings of balcony, permanent mold, free access floor, duct, side-supporting materials, asbestos-free boards, etc. The structural element comprising a fiber-reinforced cement-based hardened product applicable to construction may include, for example, soundproof wall, lids of ditch, cable trough, sewage pipes, rampart, arm racks, permanent moldes for construction of a bridge, etc.

The structural element comprising a fiber-reinforced cement-based hardened product applicable to exteriors may include, for example, artificial trees, artificial rocks, planter, fence, outdoor toilet, railings, trash box, etc.

### ii) Structural element to be applied to hydraulic reinforcing materials in the form of short fibers

The structural element of this invention comprising a fiber-reinforced cement-based hardened product containing reinforcing fiber in the form of short fibers has a feature that it is reinforced by a short fiber-compounded hydraulic reinforcing material containing at least following constitutive elements [A] or reinforcing fiber, [B] or an organic binder and [C] or unhardened dry hydraulic inorganic powder; having elements [A] and [C] combined through element [B]: being flexible before it contacts with water; and hardening in the presence of water, which has dispersed into the cement-based hardened product to harden.

The first method of this invention for producing the structural element comprising a fiber-reinforced cement-based hardened product based on the use of short fiber reinforcing fiber is: (1) to prepare a fiber-compounded hydraulic reinforcing material in the form of continuous fiber which contains at least following constitutive elements [A] or reinforcing fiber, [B] or an organic binder and [C] or unhardened and dry hydraulic inorganic powder, has elements [A] and [C] combined through element [B], is flexible before it contacts with water, and hardens in the presence of water; (2) to fill a mold by spraying the fiber-compounded hydraulic reinforcing material in the form of continuous fiber while cutting that material into short fibers of a specific length, concurrently or alternately with spraying of the cement-based slurry; and (3) to cause the short fiber-compounded hydraulic reinforcing material and cement-based slurry to harden concurrently, and to remove the unified mass out of the mold, to obtain a structural element. Incidentally, excess water generated during the hardening process in which the short fiber-compounded hydraulic reinforcing material and cement-based slurry sprayed into the mold harden concurrently may be extracted by suction.

The second method of this invention for producing the structural element comprising a fiber-reinforced cement-based hardened product based on the use of short fiber reinforcing fiber is: (1) to prepare a fiber-compounded hydraulic reinforcing material in the form of short fibers which contains at least following constitutive elements [A], [B] and [C] same as above, has elements [A] and [C] combined through element [B], is flexible before it contacts with water, and hardens in the presence of water; (2) to mix the short fiber-compounded hydraulic reinforcing material with cement, aggregate and water in a mixer, to turn the mixture into the cement-based slurry; (3) to mold the cement-based slurry by one chosen from following processes (1) to (4), thereby causing the hydraulic reinforcing material and cement-based slurry to harden concurrently to produce a unified mass, which is removed out of the mold, to give a structural element.
(1) Process in which molding is achieved by spraying.
(2) Process in which molding is achieved by placing.
(3) Process in which molding is achieved by placing followed by press.
(4) Process in which molding is achieved by extrusion.

If the short fiber-compounded hydraulic reinforcing material of this invention is used in premixing, hydraulic inorganic powder contained therein will be highly affinitive to the concrete slurry and individual filaments will easily separate from each other during kneading because hydraulic inorganic powder has been bound to reinforcing filaments through an organic binder. Moreover, because hydraulic inorganic powder infiltrating between filaments serves as a matrix, it will harden with the cement-based slurry to form a unified mass. Accordingly, voids due to insufficient infiltration by the cement-based slurry will not develop and thus strength reduction as a result of concentrated stresses will not arise.

If the short fiber-compounded hydraulic reinforcing material of this invention is used for direct spraying, filaments will not blow up from the surface even if the reinforcing filaments are violently rubbed during passage through the guides of a hopper, because the reinforcing filaments are protected by binder films. However, it is difficult to insure, during spraying, the clean separation of individual filaments and their even distribution in the cement-based slurry. Even if individual filaments are not sufficiently separated during kneading with the cement-based slurry, voids due to insufficient infiltration by the cement-based slurry will not develop because reinforcing filaments have been thoroughly impregnated by hydraulic inorganic powder, and thus strength reduction as a result of concentrated stresses will not arise.

The cement-based slurry used in this invention refers to mortar the slurry or concrete slurry, while the cement-based hardened product to what is obtained by hardening slurry.

The "structural element" used in this invention based on a short fiber-compounded hydraulic reinforcing material is the same as defined above. Incidentally, reinforcing fiber, an organic binder and unhardened and dry hydraulic inorganic powder used as starting materials of the structural element of this invention comprising a fiber-reinforced cement-based hardened product is the same with those mentioned In relation to other features of this invention presented in this specification.

### The manufacture of the structural element

Manufacture of a structural element based on a short fiber-compounded hydraulic reinforcing material may be achieved by Premixing Method or Direct Spraying Method as detailed below.

### (a) Premixing Method

A short fiber-compounded hydraulic reinforcing material is mixed with cement, aggregate, water and various admixtures, thereby causing the reinforcing material to disperse into the cement-based slurry such as a mortar slurry or concrete slurry, and the resulting mass is sprayed into a mold (spray molding), poured into a mold (pour molding), poured into a mold to be later pressed (press molding), or poured into a mold to be continuously extruded from the outlet to produce a mold (extrusion molding). For mixing various components, a general purpose concrete mixer may be used.

Because the short fiber-compounded hydraulic reinforcing material used in this invention has hydrophilic, hydraulic inorganic powder impregnated individual reinforcing filaments, binding between those filaments is so weak that the filaments easily separate from each other during kneading.

Moreover, even if individual filaments are not completely separated during kneading thereof with the cement-based slurry, voids will not develop in matrix because reinforcing filaments have been thoroughly impregnated by hydraulic inorganic powder, and thus strength reduction as a result of concentrated stresses will not arise.

### (b) Direct Spraying Method

A fiber-compounded hydraulic reinforcing material in the form of continuous fiber is introduced into a hopper gun including a cutting apparatus such as a rotary cutter, and, while being cut into short fibers therewith, it is sprayed into a mold, concurrently or alternately with spraying of the cement-based slurry. Thereby causing the short fiber-compounded hydraulic reinforcing material and cement-based slurry to harden together to produce a unified mass as a structural element. The short fiber-compounded hydraulic reinforcing material, even applied by direct spraying, insures a high strength because it has hydraulic inorganic powder impregnated individual reinforcing filaments.

In both premixing and direct spraying, the volume ratio of filaments should preferably be adjusted to 0.1 - 20%. Because this short fiber-compounded hydraulic reinforcing material absorbs excess water for hardening from the mortar slurry or the concrete slurry applied by pressure or spraying concurrently, it is not necessary to deliberately add water for hardening.

### BEST MODE FOR CARRYING OUT THE INVENTION

### Example 1

Acetone was heated to 40° C, to which polyethylene oxide (PEO) was added to 5 wt.%, and dissolved completely. Next, super fine Portland blast furnace cement 100 weight parts and silica fume 20 weight parts were mixed to give mixed powder. This powder was added to the PEO in the acetone solution until an acetone/powder ratio of 50 wt.% was reached. The resulting mass was kneaded to give a hydraulic inorganic powder dispersant of a viscosity of 10 poise.

This resulting hydraulic inorganic powder dispersant was put into an immersion bath, into which polyacrylonitrile (PAN) based high-strength carbon fiber strands [Besfight HTA-12K(TM), Toho Rayon Co.] were immersed in the following way: 80 strands each having a diameter of 7 µm and comprising 12000 filaments were arranged in parallel, and continuously moved at 5 m/min in terms of the line speed, while being pulled by a tension of 1.5 kg/strand, to cause the dispersant to impregnate strands.

Next, after the carbon fiber sheet moved out of the bath, excess water was removed therefrom. Immediately thereafter, the carbon fiber sheet soaked with the dispersant was passed through a dryer maintained at 100° C, to evaporate acetone. Finally, a carbon fiber-compounded hydraulic reinforcing material in the form of sheet having an unhardened and dry cement composition as a matrix was obtained.

The prepreg sheet of Example 1 had a thickness of 1.7 mm, weight per unit strand mesh area of 300 g/m², and weight per unit total mesh area of 2340 g/m². The volume ratio of the cement composition against the total volume of carbon fiber + cement composition + PEO was 77 vol.%, and the same for PEO was 5 vol.%.

A prepreg sheet representing Example 1 was affixed onto an existent concrete surface, and its reinforcing effect against bending was measured at the room temperature. The test piece submitted to the bending test was prepared as follows.

Firstly, a concrete test piece (having a compression strength of 322 kgf/cm²) with a size of 100 mm x 100 mm x 400 mm (length) was prepared according to JIS A1132 ("Method of preparing a test piece for the concrete strength test"). The surface to be tested was abraded with a concrete plane (PC110, Makita Co.)until aggregate appeared on the entire surface. Next, water sprayed over the test piece. Spraying water was continued until the test piece stopped absorbing water.

A prepreg sheet representing Example 1 was placed on a test piece such that the parallel axis of carbon strands coincided with the long axis of test piece, and applied closely onto the latter by removing air in the gap, and then water was sprayed over the assembly to give an irrigation per unit area of 620 g/m² (water/cement ratio being 30 wt.%).

The assembly was left at 20° C for four weeks for curing, and submitted to test. The bending test was performed at four points of the test piece according to JIS A1106 ("Method of testing the bending strength of a concrete work") using an autograph general purpose tester (Shimadzu Co.). The test piece was mounted to the tester such that the surface reinforced by the hydraulic reinforcing material was to be pulled. The distances between upper and lower fixation points were kept at 10 and 30 cm, respectively. The force acceleration was adjusted to 8 - 10 kgf/cm². The test was performed in the atmosphere kept at the room temperature, 100° C or 200° C. The results are shown in Table 2.

The reinforcing effect against bending observed in a test piece reinforced by a carbon fiber-compounded hydraulic reinforcing material in the form of sheet remains practically the same from room temperature to 200 ° C. The reinforcing activity is highly effective to heating.

### Example 2

A carbon fiber-compounded hydraulic reinforcing material in the form of sheet prepared as in Example 1 was kept in a moisture-proof bag for one month. Then, the hydraulic reinforcing material in the form of sheet was affixed onto a concrete test piece as in Example 1, and was tested for its reinforcing effect against bending at the room temperature. The preparation of a test piece to be submitted to the bending test, and application of the bending test were performed as in Example 1. The results are shown in Table 2.

The carbon fiber-compounded hydraulic reinforcing sheet having been kept one month gave the same reinforcing effect against bending as did the prepreg sheet immediately after preparation. The excellent durability of the test sheet was confirmed.

### Example 3

An epoxy resin composition bisphenol type A liquid epoxy resin 100 weight parts and polyamideamine 50 weight parts was dissolved in a mixed dissolving agent 100 weight parts comprising acetone and ethanol for industrial use at a ratio of 2 to 1, to give an epoxy resin binder solution.

On the other hand, a mixture comprising super fine Portland blast furnace cement 100 weight parts and silica fume 20 weight parts was added to the epoxy resin composition obtained as above such that the weight ratio of epoxy resin composition to hydraulic inorganic powder became 1 to 2, to give a hydraulic inorganic powder dispersant having a viscosity of 38 poise.

In the same manner as in Example 1, PAN based high-strength carbon fiber strands [Besfight HTA-12K(TM), Toho Rayon Co.] were immersed into the hydraulic inorganic powder dispersant in the following way: 80 strands each having a diameter of 7 µm and comprising 12000 filaments were continuously immersed to cause the hydraulic inorganic powder dispersant to impregnate strands. Immediately thereafter, the carbon fiber sheet soaked with the dispersant was placed in a dryer maintained at 130° C for two hours, to obtain a carbon fiber-compounded hydraulic reinforcing material in the form of sheet having an unhardened and dry cement composition as a matrix.

The hydraulic reinforcing sheet of Example 3 had a thickness of 1.8 mm, weight per unit strand mesh area of 300 g/m², and weight per unit total mesh area of 2560 g/m². The volume ratio of the cement composition against the total volume of carbon fiber + cement composition + PEO was 68 vol.%, and the same for PEO was 16 vol.%.

A prepreg sheet representing Example 3 was affixed onto an existent concrete surface, and its reinforcing effect against bending was measured in the atmosphere kept at the room temperature, 100° C or 200° . The preparation of a test piece to be submitted to the bending test, and application of the bending test were performed as in Example 1. The results are shown in Table 2.

The test piece to which a carbon fiber-compounded hydraulic reinforcing sheet of Example 3 have been affixed kept the same bending strength at the room temperature, 100 ° C and 200° C. Moreover, the reinforcing effect against bending at the room temperature was kept at the same level as in the test piece to which a prepreg containing a thermosetting resin as a matrix has been affixed.

### Example 4.

A carbon fiber-compounded hydraulic reinforcing material in the form of sheet prepared as in Example 3 was kept in a moisture-proof bag for one month. Then, this carbon fiber-compounded hydraulic reinforcing material in the form of sheet of Example 4 was affixed onto a concrete test piece as in Example 3, and was tested for its reinforcing effect against bending at the room temperature. The preparation of a test piece to be submitted to the bending test, and application of the bending test were performed as in Example 1. The results are shown in Table 2.

The carbon fiber-compounded hydraulic reinforcing sheet having been kept one month gave the same reinforcing effect against bending as did the prepreg sheet immediately after preparation. The excellent durability of the test sheet was confirmed.

### Comparative Example 1

A PAN based high-strength carbon fiber epoxy resin prepreg [Besfight prepreg #112 (TM) (hardens at 130° C with resin content of 37% and weight per unit carbon fiber area of 300 g/m²), Toho Rayon Co.] was affixed onto the surface of a concrete piece, which was examined for its reinforcing effect against bending.

The test piece for the bending test was prepared according to following procedures. Firstly, a concrete test piece was prepared as in Example 1. The surface to be tested was abraded until aggregate appeared on the entire surface. The abraded surface was washed with a dissolving agent, and, after the dissolving agent was dried out, had primer coated thereupon. The primer was an epoxy resin primer (Epoxy resin primer OW-200T, Daito Industry Co.). After coating, the test piece was cured at 20° C for 24 hours.

Next, a prepreg sheet was affixed onto a concrete test piece such that the parallel axis of carbon strands coincided with the long axis of the test piece. For application, an epoxy resin [Putty P-1112(TM), Somar] was used as an adhesive, and a mixture comprising phenylglycidyl ether or a reactive diluent (Sakamoto Chemical Co.) and imidazol [Imidazol 2MZ (TM) , Shikoku Chemical Industry Co.] was coated to soak and harden. The assembly was cured as in Example 1 and submitted to the bending test. The results are shown in Table 2.

In the test piece onto which a prepreg containing an epoxy resin as a matrix affixed the bending strength deteriorated remarkably at 100 ° C and 200 ° C. This alerts one to the problems in relation to resistance to fire and heat of resin-reinforced materials.

### Comparative Example 2

Ultra-fine blast furnace-made cement 100 weight parts, silica fume 20 weight parts, naphthalene sulfonate high performance water reducing admixture one weight part, and water 48 weight parts were kneaded to give a cement paste having a viscosity of 15 poise.

This cement paste was put into an immersion bath, into which PAN based high-strength carbon fiber strands [Besfight HTA-12K(TM), Toho Rayon Co.] were continuously immersed as in Example 1 to give a carbon fiber-compounded hydraulic reinforcing material in the form of sheet soaked with water (water existing system).

This prepreg sheet of Comparative Example 2 had a thickness of 2.5 mm, weight per unit strand mesh area of 300 g/m², and weight per unit total mesh area of 3150 g/m². A prepreg sheet representing Comparative Example 2 was affixed onto a concrete test piece as in Example 1, and its reinforcing effect against bending was measured at the room temperature. Preparation of a test piece to be submitted to the bending test, and application of the bending test was performed as in Example 1. The results are shown in Table 2.

### Comparative Example 3

A carbon fiber-compounded hydraulic reinforcing material in the form of sheet (water existing system) prepared as in Comparative Example 2 was kept in a moisture-proof bag for one month. Having been stored for one month, this carbon fiber-compounded hydraulic reinforcing material in the form of sheet (water existing system) was hardened, and could not be affixed to concrete. Thus, the inferior durability of this material was confirmed. The results are shown in Table 2. The results of the same test piece not reinforced are also shown in Table 2 to serve as control.

**Table 2**

| | REINFORCING MATERIAL | BENDING STRENGTH (kgf/cm²) | | |
|---|---|---|---|---|
| | | ROOM TEMPERATURE | 100 °C | 200 °C |
| Example 1 | Hydraulic reinforcing material, unidirectional sheet | 146 | 148 | 149 |
| Example 2 | Hydraulic reinforcing material, unidirectional sheet(long preserved product) | 143 | - | - |
| Example 3 | Hydraulic reinforcing material, unidirectional sheet | 142 | 145 | 144 |
| Example 4 | Hydraulic reinforcing material, unidirectional sheet(long preserved product) | 139 | - | - |
| Comparative Example 1 | Prepreg of themosetting resin | 151 | 100 | 72 |
| Comparative Example 2 | Prepreg of themosetting resin (hydrophilic) | 148 | - | - |
| Comparative Example 3 | Prepreg of themosetting resin (hydrophilic, long preserved product) | Untestable | - | - |
| Example 7 | Hydraulic reinforcing material, textile | 130 | 135 | 136 |
| Example 8 | Hydraulic reinforcing material, textile (long preserved product) | 128 | - | - |
| Example 9 | Hydraulic reinforcing material, net | 110 | 112 | 114 |
| Comparative Example 6 | Prepreg, epoxyresin-immersed carbon fiber textile | 141 | 102 | 71 |
| Example 10 | Hydraulic reinforcing material, unidirectional sheet(mixture solvent soluble) | 145 | - | - |
| Example 11 | Hydraulic reinforcing material, unidirectional sheet (mixture solvent soluble, long preserved product) | 138 | - | - |
| Example 20 | Hydraulic reinforcing material, unidirectional sheet | 139 | - | - |
| Example 21 | Hydraulic reinforcing material, unidirectional sheet(long preserved product) | 137 | - | - |
| Control | Not reinforced | 43 | 40 | 41 |
| Note) The "long preserved product" means test reinforceing materials kept in a moisture-proof bag. | | | | |

### Example 5

A carbon fiber-compounded hydraulic reinforcing material in the form of strand was used. The strand prepreg of Example 5 had a cross-section of 4.6 mm², weight per unit strand mesh length of 0.8 g/m, and weight per unit total mesh length of 0.8 g/m, and weight per unit total mesh length of 6.3 g/m. The volume ratio of the cement composition against the total volume of carbon fiber + cement composition + PEO was 76 vol.%, and the same for PEO was 5 vol.%.

Three strand prepregs of Example 5 were twisted into a cord to give a cord prepreg. Six such cord prepregs were placed into a mold of 50 mm wide x 200 mm thick x 130 mm long such that they were arranged in parallel with the long axis of the box with an equal distance between adjacent cord prepregs.

Following the descriptions of JIS R5201 "Method for testing physical properties of a cement work," 9.4 "Method for preparing a test piece," cement 100 weight parts, sand (105 - 297 µm) 200 weight parts and water 65 weight parts were kneaded with a pan-type mixer to give the mortar slurry. The mortar slurry was poured into the mold, and kept as it was for curing at 20° C for four weeks, to be submitted to the bending test.

The bending test was performed at three points at the room temperature according to JIS R5201 "Method of testing the physical properties of a concrete work" using an autograph general purpose tester (Shimadzu Co.).

The test piece was mounted to the tester such that the surface reinforced by the underlaying cords was to be pulled (placed lower). The distance between fixation points was kept 10 cm. The force acceleration was adjusted to 5 kgf/sec. The results are shown in Table 2. The prepreg in the form of cords made of strands of Example 5 had an excellent reinforcing activity.

### Comparative Example 4

A test piece for bending test was prepared in accordance with Example 5 except that steel wires having a round cross-section of 4 mm⌀ were used instead of a carbon fiber-compounded hydraulic reinforcing material in the form of strands. The results are shown in Table 3. The results of a test piece not reinforced are also shown in Table 3 to serve as control.

**Table 3**

| | REINFORCING MATERIAL | BENDING STRENGTH (kgf/cm²) |
|---|---|---|
| Example 5 | Hydraulic prepreg (strands) | 230 |
| Comparative Example 4 | steel wire with round cross-section | 250 |
| Control | Not reinforced | 60 |

### Example 6

A carbon fiber-compounded hydraulic reinforcing material in the form of strands as obtained in Example 5 was cut into pieces of 6mm long to give a prepreg in the form of chopped strands. Using a pan-type mixer, ordinary portland cement 100 weight parts, silica fume 20 weight parts, sand 200 weight parts strained to a size of 100 - 300 µm, naphthalene sulfonate high performance water reducing admixture one weight part, water 37 weight pats, and prepreg in the form of chopped strands six weight parts were kneaded together to give a carbon fiber-compounded reinforcing mortar slurry.

The slurry was poured into a mold of 40 mm x 40 mm x 160 mm long to prepare a test piece for mortar bending test. The slurry was kept as it was for curing at 20 ° C for four weeks, to be submitted to the bending test. The bending test was performed at three points at the room temperature according to JIS R5201 "Method of testing the physical properties of a concrete work," 9.5 "Measurement," using an autograph general purpose tester (Shimadzu Co.).

The distance between fixation points was kept 12 cm. The force acceleration was adjusted to 5 kgf/sec. The results are shown in Table 2.

The prepreg in the form of chopped strands of Example 5 had an excellent reinforcing activity.

### Comparative Example 5

A test piece for bending test was prepared in accordance with Example 6 except that carbon fiber one weight part [Besfight HTA-12K(TM), Toho Rayon Co.] which had been soaked with water and cut into pieces of 6mm long was added instead of a carbon fiber-compounded hydraulic reinforcing material in the form of chopped strands, and evaluated for its reinforcing effect against bending. The results are shown in Table 4. With regard to the carbon fiber cut into pieces representing Comparative Example 5, fiber turned into balls while the mortar slurry was prepared by kneading, and its strength was impaired.

**Table 4**

| | REINFORCING MATERIAL | BENDING STRENGTH (kgf/cm²) |
|---|---|---|
| Example 6 | Hydraulic prepreg (chopped strands) | 112 |
| Comparative Example 5 | Carbon fiber (6mm long) | 91 |

### Example 7

Acetone was heated to 40 °C to which polyethyleneoxide (PEO) was Added to 5 wt.%, and dissolved completely. Next, super fine Portland blast furnace cement 100 weight parts and silica fume 20 weight parts were mixed to give mixed powder. This powder was added to the PEO in the acetone solution until an acetone/powder ratio of 50 wt.% was reached. The resulting mass was kneaded to give a hydraulic inorganic powder dispersant of a viscosity of 10 poise.

This hydraulic inorganic powder dispersing binder solution was put into an immersion bath, into which polyacrylonitrile (PAN) based high-strength carbon fiber strands [Besfight HTA-12K(TM), Toho Rayon Co.] were immersed in the following way: 40 strands each having a diameter of 7 µm and comprising 12000 filaments were arranged in parallel with a distance of 10 mm between adjacent strands, and continuously moved at 5 m/min in terms of the line speed, while being pulled by a tension of 1.5 kg/strand, to cause the hydraulic inorganic powder dispersing the organic binder solution to impregnate strands.

Next, after the carbon fiber sheet moved out of the bath, excess hydraulic inorganic powder dispersing the organic binder solution was removed therefrom. Immediately thereafter, the carbon fiber strands soaked with the dispersant was passed through a dryer maintained at 100°C to evaporate acetone. Finally, a carbon fiber-compounded hydraulic reinforcing material in the form of strands having an unhardened and dry cement composition as a matrix and utilizing carbon fiber as the reinforcing fiber was obtained.

The resulting hydraulic reinforcing material had a cross-section of 4.6 mm², weight per unit strand mesh length of 0.8 g/m, and weight per unit total mesh length of 6.3 g/m. The volume ratio of the cement composition against the total volume of carbon fiber + cement composition + PEO was 76 vol.%, and the same for PEO was 5 vol.%.

The hydraulic reinforcing material in the form of strands of Example 7 was used as warps and wefts, and woven into a hydraulic reinforcing material in the form of fabric having a size of 1040 mm wide x 10 m long (plane weave with a weight per unit carbon fiber area of 300 g/m², the density of warps of 187/m, and density of wefts of 187/m). The hydraulic reinforcing fabric was excellent in drape and form retaining property.

Next, a hydraulic reinforcing material in the form of fabric of Example 7 was affixed to an existent concrete surface, and its reinforcing effect against bending was tested at the room temperature. The test piece for the bending test was prepared according to following procedures.

The hydraulic reinforcing material in the form of fabric of Example 7 was cut into a piece of 100 mm x 400 mm long, and was affixed onto a concrete test piece such that the direction of warps coincided with the long axis of the test piece; and then water was sprayed over the assembly to give some irrigation per unit area of 620 g/m² (water/cement ratio being 30 wt.%).

The assembly was left at 20° C for four weeks for curing, and submitted to bending test. The bending test was performed at four points of the test piece according to JIS A1106 ("Method of testing the bending strength of a concrete work") using an autograph general purpose tester (Shimadzu Co.). The test piece was mounted to the tester such that the surface reinforced by the hydraulic reinforcing material was to be pulled. The distances between upper and lower fixation points were kept at 10 and 30 cm, respectively. The force acceleration was adjusted to 8 - 10 kgf/cm². The test was performed in the atmosphere kept at the room temperature, 100° C and 200 ° C. The results are shown in Table 2.

The reinforcing effect against bending observed in a test piece reinforced by a carbon fiber-compounded hydraulic reinforcing material in the form of fabric remains practically the same from room temperature to 200° C. The reinforcing activity is highly effective to heating.

### Example 8

A carbon fiber-compounded hydraulic reinforcing material in the form of fabric prepared as in Example 7 was kept in a moisture-proof bag for one month. Then, the hydraulic reinforcing material in the form of fabric was affixed onto a concrete test piece as in Example 7, and was tested for its reinforcing effect against bending at the room temperature.

The preparation of a test piece to be submitted to the bending test, and application of the bending test was performed as in Example 1. The results are shown in Table 2.

The carbon fiber-compounded hydraulic reinforcing fabric of Example 8 having been kept one month gave the same reinforcing effect against bending as did the prepreg fabric immediately after preparation. The excellent durability of the test fabric was confirmed.

### Comparative Example 6

A concrete test piece was prepared as in Example 7, and its surface was abraded until aggregate appeared on the entire surface. The abraded surface was washed with a dissolving agent, and after the dissolving agent was dried out, had the primer coated thereupon at a density of 200 g/m². The primer was a concrete reinforcing primer [TCP-101(TM), Toho Rayon Co.]. After hardening of the first coat, a matrix resin [TCM-101 (TM), Toho Rayon Co.] was coated at a density of 100 g/m², and immediately thereafter PAN based high-strength carbon fiber fabric [the Besfight fabric W-7101(TM), Toho Rayon Co.] (plane weave with the weight/unit carbon fiber length of 630 g/m², the warp density of 393/m, and the weft density of 393/m) was affixed thereupon to cause the matrix resin to impregnate the fabric. A matrix resin [TCM-101 (TM), Toho Rayon Co.] was further coated at a density of 200 g/m² to harden. The resulting assembly was cured for the same period as in Example 7, and submitted to the bending test. The test piece of Comparative Example 6 consisting of concrete having a carbon fiber fabric prepreg containing epoxy resin as a matrix affixed thereupon was greatly impaired in its strength at 100 °C and 200 ° C. This alerts one to the problems in relation to resistance to fire and heat of resin-reinforced materials.

### Example 9

Twenty carbon fiber-compounded hydraulic reinforcing materials in the form of strands prepared as in Example 7 were bundled into a hydraulic reinforcing material in the form of rope. Then, the hydraulic reinforcing material in the form of rope was used as warps and wefts to produce a hydraulic reinforcing material in the form of net having a size of 1040 mm wide x 10 m long(weight per unit carbon fiber area of 620 g/m² , a density of warps of 37/m, and a density of wefts of 37/m).

Following JIS A1132 ("Method of preparing a test piece for the concrete strength test"), a test piece to be submitted to bending test was prepared. A mold (100 mm x 100 mm x 400 mm long) was prepared, and concrete slurry was poured into the box until a liquid mass of 5 mm height (the designed strength of 210 kgf/cm2) rested on the bottom. Then, the hydraulic reinforcing material in the form of net was cut into pieces having a size of 100 mm x 400 mm long. One piece was affixed onto the test piece, and the concrete slurry was poured over it. The assembly was kept at 20 ° C for four weeks for curing and submitted to the bending test.

The bending test was performed at the room temperature as in Example 7. The results are shown in Table 2. The hydraulic reinforcing material in the form of net of Example 9 had an excellent reinforcing activity.

### Example 10

### Water is existent in the system of the production process

Water was added to PEO so that PEO gave a concentration of 10 wt.%, and dissolved PEO. Next, naphthalene sulfonate setting retarding high performance water reducing admixture one weight part was added, and acetone added until the water/acetone ratio became 50 wt.%. Then, ultra-fine, blast furnace-made cement 100 weight parts and silica fume 20 weight parts were mixed to give mixed powder. This powder was added to the PEO in the acetone solution until an acetone/powder ratio of 40 wt.% was reached. The resulting mass was kneaded to give a hydraulic inorganic powder dispersing the organic binder solution of a viscosity of 13 poise.

The resulting organic binder solution dispersing a hydraulic inorganic powder was used in accordance with Example 1 except that the dryer was set to 120 ° C to obtain a carbon fiber-compounded hydraulic reinforcing material in the form of sheet containing carbon fiber as reinforcing fiber and an unhardened, dry cement composition as a matrix.

The hydraulic reinforcing material in the form of the unidirection sheet of Example 10 had a thickness of 1.8 mm, weight per unit strand mesh area of 300 g/m², and weight per unit total mesh area of 2478 g/m². The volume ratio of the cement composition against the total volume of carbon fiber + cement composition + PEO was 83 vol.%, and the same for PEO was 5 vol.%.

The carbon fiber-compounded hydraulic reinforcing material in the form of the unidirectional sheet was affixed onto the surface of existent concrete, and tested for its resistance against bending at the room temperature. The bending test was performed at the room temperature as in Example 7. The results are shown in Table 2.

The test piece to which a carbon fiber-compounded hydraulic reinforcing material had been affixed had an excellent resistance to bending.

### Example 11

### Water is existent in the system of the production process

A carbon fiber-compounded hydraulic reinforcing material in the form of the unidirectional sheet prepared as in Example 10 was kept in a moisture-proof bag for one month. Then, this carbon fiber-compounded hydraulic reinforcing material in the form of the unidirectional sheet of Example 4 was affixed onto a concrete test piece as in Example 10, and was tested for its reinforcing effect against bending at the room temperature. The preparation of a test piece to be submitted to the bending test, and application of the bending test was performed as in Example 10. The results are shown in Table 2.

The carbon fiber-compounded hydraulic reinforcing the unidirectional sheet of Example 11 having been kept one month gave the same reinforcing effect against bending as did the reinforcing materials of Examples 1 and 2. The excellent durability of the test the unidirectional sheet was confirmed.

### Example 12

### Hardened product of the fiber-compounded hydraulic compound

The carbon fiber-compounded hydraulic reinforcing material in the form of the unidirectional sheet prepared as in Example 1 was cut into pieces having a size of 300 mm x 300 mm. Two pieces were laid one over the other on a flat plane such that their fiber directions coincided. During lamination, each time one piece of carbon fiber-compounded hydraulic compound was laid, water was sprayed thereupon to give an irrigation per unit area of 620 g/m² (water/cement ratio being 30 wt.%). The assembly was kept at 20° C for four weeks for curing to give a fiber-compounded plate of Example 12. Prom this plate, a test piece for bending test having a size of 15 mm wide x 4 mm thick x 180 mm long was cut out and submitted to bending test.

The bending test was performed by bending three points and using an autograph general purpose tester (Shimadzu Co.). The distance between fixation points was kept 128 mm. The test was performed at the room temperature with the cross-head speed kept at 5 mm/min. As a result, it was found that the carbon fiber-compounded plate of Example 12 was a bending resistance of 310 kgf/cm², that is, highly resistant to bending.

### Example 13

### Hardened product of fiber-compounded hydraulic compound

A carbon fiber-compounded hydraulic compound in the form of the unidirectional sheet as obtained in Example 12 (300 mm wide) was wound round a mandril made of solid polyvinyl chloride and having an external diameter of 318 mm such that the direction of carbon fiber had an angle of 90° to the long axis of mandril to form a three layered roll around the mandril. During this operation, each time a roll of carbon fiber-compounded hydraulic compound was formed around the mandril, water was sprayed thereupon to give an irrigation per unit area of 620 g/m² (water/cement ratio being 30 wt.%). Later, over the external surface of the laminated body of carbon fiber-compounded hydraulic compound a polypropylene tape was wound round with a constant pitch. The assembly was placed in warm water kept at 50° C for 48 hours to facilitate curing. Then, the assembly was separated from the mandril made of solid polyvinyl chloride to give a carbon fiber-compounded hardened product in the form of pipe. This hardened product in the form of pipe was highly rigid, and was excellent in resistance to fire and heat.

### Example 14

### Reinforcing a zinced steel plate by applying a fiber-compounded hydraulic reinforcing material thereto

A carbon fiber-compounded hydraulic reinforcing material as prepared in Example 1 was affixed to a zinced steel plate, and tested for its reinforcing effect against bending at the room temperature. The test piece for bending test was prepared according to following procedures.

A zinced steel plate (□300 mm x 0.6 mm thick) was prepared; and its surface was wiped with duster soaked with acetone to remove dust and oil therefrom, and was abraded with #320 sand paper. Next, a polyacrylate dispersant was coated; immediately thereafter a hydraulic reinforcing material in the form of sheet was affixed thereupon; and water was applied thereupon with brush. Water was given a sufficient amount to hydrate the hydraulic reinforcing material for hardening. The yield was kept at 20° C for four weeks for curing, and a test piece for bending test having a size of 10 mm wide x 144 mm long x 3.1 mm thick was cut out therefrom.

The bending test was performed by bending three points and using an autograph general purpose tester (Shimadzu Co). The distance between fixation points was kept 100 mm. The test was performed at the room temperature with the cross-head speed kept at 5 mm/min. The test piece was mounted to the tester such that the hydraulic reinforcing material was to be pulled (placed lower). A zinced steel plate not reinforced was submitted to the same test to serve as control. The results are shown in Table 5 below.

**Table 5**

| | REINFORCING MATERIAL | BENDING LOAD (kgf) |
|---|---|---|
| Example 14 | Hydraulic reinforcing material | 17 |
| Control | None | 11 |

According to Table 5, the test piece consisting of a zinced steel plate reinforced by a fiber-compounded hydraulic reinforcing material yielded to bending when the hydraulic reinforcing material was broken in the presence of tension, suggesting the excellent binding the activity of the hydraulic reinforcing material towards the steel plate.

### Example 15

### Reinforcing existent concrete by underlaying a fiber-compounded hydraulic reinforcing material

Ten carbon fiber-compounded hydraulic reinforcing materials in the form of strands as obtained in Example 7 were bundled into a fiber-compounded hydraulic reinforcing material in the form of rope.

Following JIS A1132 ("Method of preparing a test piece for the concrete strength test"), a test piece having a size of 100 mm wide x 100 mm thick x 400 mm long (designed strength of 210 kgf/cm²) was prepared. The surface to be tested was abraded with a concrete grinder (PC110, Makita Co.) until aggregate appeared on the entire surface. Next, water sprayed over the test piece. Spraying water was continued until the test piece stopped adsorbing water.

A mold (100 mm x 100 mm x 400 mm long) was prepared, and the concrete test piece was put into that box. A poly acrylic ester polymer dispersant was coated on the concrete test piece, and concrete slurry was poured into the box until it had a thickness of 5 mm (designed strength of 210 kgf/cm²). Immediately thereafter, four fiber-compounded hydraulic reinforcing materials in the form of rope were placed over the test piece such that the fiber direction coincided with the long axis of the test piece, and the concrete slurry was poured over it until the top reached the rim of the box. The assembly was kept at 20° C for four weeks for curing and submitted to the bending test.

The bending test was performed by bending four points of the test piece according to JIS A1106 ("Method of testing the bending strength of a concrete work") and using an autograph general purpose tester (Shimadzu Co.). The test piece was mounted to the tester such that the surface upon which hydraulic reinforcing material was underlaid was to be pulled. The distances between upper and lower fixation points were kept at 10 and 30 cm, respectively. The force acceleration was adjusted to 8 - 10 kgf/cm². The test was performed at the room temperature.

The results are shown in Table 6 below. The hydraulic reinforcing material in the form of rope of Example 15 proved to have excellent reinforcing effect.

### Comparative Example 7

A test piece was prepared in accordance with Example 15 except that instead of a fiber-compounded hydraulic reinforcing material in the form of strands, a hardened product from PAN based high-strength carbon fiber strands [Besfight HTA-12K(TM), Toho Rayon Co.] was used, to be evaluated for its reinforcing activity against bending.

The results are shown in Table 6. Because with this test piece epoxy resin serving as a matrix of the fibrous reinforcing material was less affinitive to concrete, and thus its resistance to bending was considerably lower than Example 15. The results from a test piece not reinforced are also listed as control in Table 6 bellow.

**Table 6**

| | BENDING STRENGTH (kgf/cm²) |
|---|---|
| Test piece not reinforced | 43 |
| Example 15 | 116 |
| Comparative example 7 | 80 |

### Example 16

### Reinforcing an existent concrete surface by spraying a fiber-compounded hydraulic reinforcing material thereto

A carbon fiber-compounded hydraulic reinforcing material as obtained in Example 7 was cut with a guillotine cutter into pieces of 25 mm long to give a fiber-compounded hydraulic reinforcing material in the form of chopped strands.

Using a pan-type mixer, ordinary portland cement 100 weight parts, sand with a particle diameter of 5 mm or less 183 weight parts, sand with a particle diameter of 5 - 16 mm 217 weight parts, water 58 weight parts, and air entirying water reducing admixture 0.25 weight parts were kneaded together, to which was added a fiber-compounded hydraulic reinforcing material in the form of chopped strands as described above 17.9 weight parts, and the resulting mass was further kneaded, to give concrete slurry having the fiber-compounded hydraulic reinforcing material in the form of chopped strands dispersed therein. The content of carbon fiber in the slurry was 1 volume%.

Firstly, a concrete test piece (having a compression strength of 322 kgf/cm²) with a size of 100 mm x 100 mm x 400 mm (length) was prepared according to JIS A1132 ("Method of preparing a test piece for the concrete strength test"). The surface to be tested was abraded with a concrete grinder (PC110, Makita Co.)until aggregate appeared on the entire surface. Next, water sprayed over the test piece. Spraying water was continued until the test piece stopped absorbing water. The mold was assembled around the test piece. Polyacrylate polymer-dispersion was painted on the test piece of concrete, followed by the concrete slurry dispersing the fiber-compounded hydraulic reinforcing material in the form of chopped strands being poured in thickness of 10mm. Cure was kept for 4 weeks at 20 °C as it is and the resultant product was offered in bending test.

The bending test was performed by bending four points according to JIS A1106 ("Method of testing the bending strength of a concrete work") and using an autograph general purpose tester (Shimadzu Co.). The test piece was mounted to the tester such that the surface of concrete in which the fiber-compounded hydraulic reinforcing material in the form of chopped strands was dispersed was to be pulled. The distances between upper and lower fixation points were kept at 10 and 30 cm, respectively. The force acceleration was adjusted to 8 - 10 kgf/cm². The test was performed at the room temperature.

The results are shown in Table 7 below. The hydraulic reinforcing material in the form of chopped strands of Example 16 proved to have the excellent reinforcing effect.

### Comparative Example 8

A test piece was prepared in accordance with Example 16 except that instead of a fiber-compounded hydraulic reinforcing material in the form of strands, PAN based high-strength carbon fiber strands [Besfight HTA-12K(TM), Toho Rayon Co.] to which hydraulic inorganic powder did not bind were used, to be evaluated for its reinforcing activity against bending.

The results are shown in Table 7. With regard to this test piece, carbon fiber filaments in the form of chopped strand formed fiber balls and did not disperse into the concrete slurry satisfactorily. Therefore, its resistance to bending became lower than Example 16. The results from a test piece not reinforced are also shown in Table 7 as comparison.

**Table 7**

| | BENDING LOAD (kgf) | BENDING STRENGTH (kgf/cm²) |
|---|---|---|
| Test piece not reinforced | 1400 | 42 |
| Example 16 | 1800 | 44 |
| Comparative Example 8 | 1500 | 37 |

### Example 17

Using a pan-type mixer, ordinary portland cement 100 weight parts, No. 5 quartz sand 100 weight parts and water 60 weight parts were kneaded, to give the mortar slurry.

Three moldes each having a size of 40 mm wide x 160 mm long x 20 mm thick) were prepared, and concrete slurry was poured into those boxes until a liquid mass of 2 mm height rested on the bottom. Then, six carbon fiber-compounded hydraulic reinforcing materials in the form of strands as obtained in Example 7 were placed into each mold in parallel with its long axis. The concrete slurry was then poured over it until the top reached the rim of the box, to cause hydraulic inorganic powder in the hydraulic reinforcing material and mortar slurry to harden together to form a unified carbon fiber-reinforced mortar plate. The volume content of carbon fiber was 0.3%.

The mortar plate was kept at 20° C for four weeks for curing, to be submitted to the bending test. The bending test was performed at three points at the room temperature according to JIS R5201 "Method of testing the physical properties of a cement work," 9.5 "Measurement," using an autograph general purpose tester (Shimadzu Co.). The test piece was mounted to the tester such that the surface reinforced by the reinforcing strands was to be pulled (placed lower), and the distance between fixation points was kept 12 cm. The force acceleration was adjusted to 5 kgf/sec.

The results are shown in Table 8 below. The mortar plate of Example 17 reinforced by a fiber-compounded hydraulic reinforcing material in the form of continuous fiber proved to have excellent resistance to bending.

### Comparative Example 9

A test piece was prepared in accordance with Example 17 except that instead of a fiber-compounded hydraulic reinforcing material in the form of strands, a hardened product from PAN based high-strength carbon fiber roving prepreg [Besfight roving prepreg P-1112(TM), Toho Rayon Co.] was used, to be evaluated for its reinforcing activity against bending.

The results are shown in Table 8 below. Because with this test piece epoxy resin serving as a matrix of the fibrous reinforcing material was less affinitive to concrete, and thus its resistance to bending was considerably lower than Example 17. The results from a test piece not reinforced are also listed in Table 8 as comparison.

**Table 8**

| | BENDING STRENGTH (kgf/cm²) |
|---|---|
| Test piece not reinforced | 70 |
| Example 17 | 220 |
| Comparative example 9 | 160 |

### Example 18

### Structural element based on a fiber-compounded hydraulic reinforcing material in the form of short fibers

Using a pan-type mixer, ordinary portland cement 100 weight parts, No. 5 quartz sand 100 weight parts and water 60 weight parts were kneaded together to give a mortar slurry.

A carbon fiber-compounded hydraulic reinforcing material in the form of strands as obtained in Example 7 was sprayed into a mold with a spray gun, while being cut with a roving cutter into pieces of 25 mm long, concurrently with spraying of the mortar slurry, thereby causing the short fiber-compounded hydraulic reinforcing material to disperse in the concrete slurry in the mold extending in a two-dimensional space, and to hydrate it while being in contact with the walls of mold for hardening. Thus, a fiber-reinforced mortar plate with a size of 300 mm wide x 200 mm long x 10 mm thick was obtained. The mortar plate had a carbon fiber content of 0.5%.

The mortar plate was kept at 20° C for four weeks for curing, and a test piece for bending test with a size of 40 mm wide x 100 mm long x 10 mm thick was cut out from the plate to be submitted to the bending test. The bending test was performed at three points at the room temperature according to JIS R5201 "Method of testing the physical properties of a cement work," 9.5 "Measurement," using an autograph general purpose tester (Shimadzu Co.). The test piece was mounted to the tester such that the surface reinforced by the reinforcing strands was to be pulled (placed lower), and the distance between fixation points was kept 10 cm. The force acceleration was adjusted to 5 kgf/sec.

The results are shown in Table 9 below. The mortar plate of Example 18 reinforced by a fiber-compounded hydraulic reinforcing material in the form of short fibers proved to have excellent resistance to bending.

### Comparative Example 10

A test piece was prepared in accordance with Example 18 except that instead of a fiber-compounded hydraulic reinforcing material in the form of strands, PAN based high-strength carbon fiber strands [Besfight HTA7-12K (TM), Toho Rayon Co.] to which hydraulic inorganic powder did not bind was used, to be evaluated for its reinforcing activity against bending.

The results are shown in Table 9 below. With regard to this test piece, carbon fiber filaments in the form of chopped strand formed fiber balls during spraying and thus no mortar slurry impregnated filaments. Therefore, its resistance to bending became considerably lower than Example 18, and did not show notable improvement over the results from a test piece not reinforced.

### Example 19

### Structural element based on a fiber-compounded hydraulic reinforcing material in the form of short fibers

A carbon fiber-compounded hydraulic reinforcing material in the form of strands as obtained in Example 18 was cut with a guillotine cutter into pieces of 15 mm long, to give a fiber-compounded hydraulic reinforcing material in the form of chopped strands. Then, using a pan-type mixer, ordinary portland cement 100 weight parts, No. 5 quartz sand 100 weight parts, water 60 weight parts, and the fiber-compounded hydraulic reinforcing material in the form of chopped strands 2.8 weight parts (0.36 weight part in terms of carbon fiber weight) were kneaded together, to give a fiber-reinforced concrete slurry.

The fiber-reinforced mortar slurry was placed into a mold with a size of 40 mm wide x 160 mm long x and hydrated for hardening. The mortar had a carbon fiber content of 0.5 vol.%. The mortar plate was cured at 20 ° C for four weeks, to be submitted to the bending test. The bending test was performed at the room temperature as in Example 18.

The results are shown in Table 9 below. The mortar plate of Example 19 reinforced by a short fiber-compounded hydraulic reinforcing material proved to have excellent resistance to bending.

### Comparative Example 11

A test piece was prepared in accordance with Example 19 except that instead of a fiber-compounded hydraulic reinforcing material in the form of strands. PAN based high-strength carbon fiber strands [Besfight HTA7-12K (TM), Toho Rayon Co.] which had been cut into pieces of 15 mm long and weighing 0.36 weight part was used, to be evaluated for its reinforcing activity against bending. The results are shown in Table 9 below. With regard to this test piece, carbon fiber filaments did not separate satisfactorily, and thus mortar slurry did not impregnate filaments. Therefore, its resistance to bending became considerably lower than Example 19, and was practically the same with that of a test piece not reinforced.

### Comparative Example 12

A test piece was prepared in accordance with Comparative Example 11 according to Example 19 except that methyl cellulose 0.5 weight part and polybutyl phosphate or a defoaming agent 0.5 weight part were added, to be evaluated for its reinforcing activity against bending. The results are shown in Table 9 below. With regard to this test piece, dispersibility of carbon fiber filaments was improved, but the viscosity of slurry became so high that it captured air as babbles. Therefore, its resistance to bending was considerably lower than Example 19.

**Table 9**

| | BENDING STRENGTH (kgf/cm²) |
|---|---|
| Test piece not reinforced | 50 |
| Example 18 | 90 |
| Comparative example 10 | 57 |
| Example 19 | 81 |
| Comparative example 11 | 55 |
| Comparative example 12 | 66 |

### Example 20

Ultra-fine, blast furnace-made cement 100 weight parts and silica fume 20 weight parts were mixed in the form of particles to give mixed powder. On the other hand, water 100 weight parts and a polyacrylic ester (PAE) polymer dispersant (solid components being 40 wt.%) 13.5 weight parts were kneaded to give an hydrophilic organic binder solution.

The hydraulic inorganic powder and hydrophilic organic binder solution were added little by little into a continuously operating high-speed dissolving machine such that the ratio of hydrophilic organic binder solution/hydraulic inorganic powder was kept to be 50 wt.%, and the resulting organic binder solution dispersing a hydraulic inorganic powder was continuously fed into an immersion bath, into which PAN based high-strength carbon fiber strands [Besfight HTA-12K(TM), Toho Rayon Co.] were immersed in the following way: 40 strands each having a diameter of 7 µm and comprising 12000 filaments were arranged in parallel, and continuously moved at 5 m/min in terms of the line speed, while being pulled by a tension of 1.5 kg/strand, to cause the organic binder solution dispersing a hydraulic inorganic powder to impregnate filaments.

Immediately thereafter, the carbon fiber sheet soaked with aqueous inorganic powder dispersing organic binder solution was passed through a dryer maintained at 150° C, to evaporate water. Finally, a carbon fiber-compounded hydraulic reinforcing material in the form of the unidirectional sheet containing carbon fiber as reinforcing fiber and an unhardened and dry cement composition as a matrix was obtained.

Incidentally, the amount per unit time of organic binder solution dispersing a hydraulic inorganic powder fed into the continuously operating high-speed kneading machine was adjusted such that it could continuously impregnate carbon fiber strands. The organic binder solution dispersing a hydraulic inorganic powder adjusted as above, after having impregnated the carbon fiber sheet, was passed through a dryer whose condition was so adjusted to cause water contained in the organic binder solution to evaporate within five minutes.

The hydraulic reinforcing material in the form of the unidirectional sheet of Example 20 had a thickness of 1.8 mm, weight per unit carbon fiber area of 300 g/m², and weight per unit total mesh area of 2485 g/m². The volume ratio of the cement composition against the total volume of carbon fiber + cement composition + PEO was 84 vol.%, and the same for PAE was 5 vol.%.

A hydraulic reinforcing material in the form of the unidirectional sheet of Example 20 was affixed to an existent concrete surface, and its reinforcing effect against bending was tested at the room temperature. The test piece for the bending test was prepared according to following procedures.

Following JIS A1132 ("Method of preparing a test piece for the concrete strength test"), a test piece having a size of 100 mm x 100 mm x 400 mm long (compression strength of 322 kgf/cm² ) was prepared. The surface to be tested was abraded with a concrete grinder[PC110 (TM). Makita Co.], until aggregate appeared on the entire surface. Next, water sprayed over the test piece. Spraying water was continued until the test piece stopped absorbing water.

The carbon fiber-compounded hydraulic reinforcing material in the form of the unidirectional sheet of Example 20 was placed on the concrete test piece such that the fiber direction coincided with the long axis of the test piece. Then, water was sprayed thereupon to give an irrigation per unit area of 620 g/m² (water/cement ratio being 30 wt.%). The assembly was kept at 20 ° C for four weeks for curing to be submitted to bending test.

The bending test was performed by bending four points according to JIS A1106 ("Method of testing the bending strength of a concrete work"), and using an autograph general purpose tester (Shimadzu Co.). The test piece was mounted to the tester such that the surface reinforced by the hydraulic reinforcing material was to be pulled, and the distances between upper and lower fixation points were kept at 10 and 30 cm, respectively. The force acceleration was adjusted to 8 - 10 kgf/min. The results are shown in Table 2 above.

The test piece having the fiber-compounded hydraulic reinforcing material affixed thereupon had excellent resistance to bending.

### Example 21

A carbon fiber-compounded hydraulic reinforcing material in the form of the unidirectional sheet prepared as in Example 20 was kept in a moisture-proof bag for one month. Then, this hydraulic reinforcing material in the form of the unidirectional sheet was affixed onto a concrete test piece as in Example 1, and was tested for its reinforcing effect against bending at the room temperature. Preparation of a test piece to be submitted to the bending test, and application of the bending test were performed as in Example 20. The results are shown in Table 2 above. The carbon fiber-compounded hydraulic reinforcing the unidirectional sheet having been kept one month gave the same reinforcing effect against bending as did Example 1 above. The excellent durability of the test sheet was confirmed.

### Example 22

Polyester polyol (PO) was added to methylethyl ketone (MEK) such that its concentration became 5 wt.%, and completely dissolved. Next, super fine Portland blast furnace cement with an average diameter of 1.6 µm 100 weight parts and silica fume with an average diameter of 0.1 µm 20 weight parts in the form of particles were mixed to give mixed powder. This powder was added to the PO in MEK solution until an MEK/powder ratio of 50 wt.% was reached. The resulting mass was kneaded, to give a hydraulic inorganic powder dispersant of a viscosity of 10 poise.

This hydraulic inorganic powder dispersant was put into an immersion bath, into which one PAN based high-strength carbon fiber strand [Besfight HTA-12K(TM), Toho Rayon Co.] was immersed as reinforcing fiber in the following way: a strand having a diameter of 7 µm and comprising 12000 filaments was continuously moved at 5 m/min in terms of the line speed, while being pulled by a tension of 1.5 kg/strand, to cause the dispersant to impregnate filaments.

Next, after the carbon fiber strand moved out from the bath, excess dispersant was removed therefrom. Immediately thereafter, the carbon fiber strand soaked with the dispersant was passed through a dryer maintained at 100° C, to evaporate MEK. Finally, a carbon fiber-compounded hydraulic reinforcing material having an unhardened and dry cement composition as a matrix and utilizing carbon fiber as reinforcing fiber was obtained.

The resulting reinforcing material of Example 22 had a cross-section of 3.5 mm², weight per unit strand mesh length of 0.8 g/m, and weight per unit total mesh length of 4.8 g/m. The volume ratio of cement composition against the total volume of carbon fiber + cement composition + PEO was 70.4 vol.%, and the same for PEO was 4.6 vol.%.

The reinforcing material in the form of strands of Example 22 was wound around a plate with sides of 300 mm with a pitch of 20 mm, and the assembly was kept at 20° C for four weeks for curing to harden later.

The reinforcing hardened product in the form of strands was cut into pieces of 300 mm long, and tabs were attached to both ends of each piece to produce a test strip of 300 mm long and of 200 mm in gauge length. Following JIS R7601 "Method for testing carbon fiber," 6.6.2 "Test of resin-soaked strand," the test strip was submitted to tensile test under a pulling speed of 30 mm/min.

The results are shown in Table 10 below. The reinforcing material in the form of strands of Example 22 had an excellent tensile strength.

### Comparative Example 13

A reinforcing material in the form of strands was prepared in accordance with Example 22 except that super fine Portland blast furnace cement with an average particle diameter of 4 µm was used. The reinforcing material in the form of strands of Comparative Example 13 had a cross-section of 4.6 mm², weight per unit strand mesh length of 0.8 g/m, and weight per unit total mesh length of 6.3 g/m. The volume ratio of cement composition against the total volume of carbon fiber + cement composition + PO was 76 vol.%, and the same for PO was 5 vol.%. The reinforcing material in the form of strands of Comparative Example 13 was used as in Example 22 above to produce a test piece for tensile test, to be submitted to tensile test.

The results are shown in Table 10 below. The reinforcing material in the form of strands of Comparative Example 13 had a lower break strength than Example 22 incorporating cement with a smaller particle size, and a tensile strength half as large as that of Example 22 because it contained a smaller volume content of carbon fiber.

**Table 10**

| | AVERAGE PARTICLE DIAMETER (µm) | VOLUME CONTENT OF FIBER (vol.%) | TENSILE LOAD (kgf) | TENSILE STRENGTH (kgf/cm²) |
|---|---|---|---|---|
| Example 22 | 1.6 | 25 | 142 | 40 |
| Comparative Example 13 | 4.0 | 19 | 104 | 22 |

### INDUSTRIAL APPLICABILITY

The fiber-compounded hydraulic reinforcing material of this invention forms matrix of hydraulic inorganic powder in the presence of water, and then hardens. Thus, it can be used as a reinforcing/repairing material of concrete constructions, or as a building/construction material.

The fiber-compounded hydraulic reinforcing material of this invention is largely composed of inorganic substances, and thus it is excellent in resistance to fire and heart, and in durability.

The fiber-compounded hydraulic reinforcing material of this invention is largely composed of inorganic substances, and thus it is so adhesive to concrete as to dispense with the use of primer during applying operation.

The fiber-compounded hydraulic reinforcing material of this invention is, when wrapped in a moisture-proof material, prevented from hardening in the presence of moisture from the air, and thus insures safe storage over a long period.

The fiber-compounded hydraulic reinforcing material in the form of a long-axis cord of this invention can be used as a reinforcing fibrous rod of a concrete construction. Because it is lighter in weight and better in drape than the conventional fiber-reinforced plastic cable or iron rod, it will improve workability if used as a crosswise reinforcing rod, and help the construction to maintain resistance to external forces even when the construction is exposed to fire.

The fiber-compounded hydraulic reinforcing material in the form of chopped strands of this invention can be used after it has been evenly dispersed into mortar or concrete. Because with this reinforcing material sites not impregnated by liquid cement are less than with the conventional reinforcing fiber chopped strands, the strength of reinforcing fiber is more easily reflected in the strength of the reinforcing compound material of which it is a component.

With the method for producing a fiber-compounded hydraulic reinforcing material of this invention, it is possible for at least one of dispersion medium, binder solution and other admixtures to be used as needed, to contain water.
(1) If water is used as a dispersion medium of hydraulic inorganic powder, it is possible to use admixtures which may lower the viscosity of hydraulic inorganic powder dispersant such as a water reducing admixture, high performance water reducing admixture and fluidizer. Therefore, the organic binder solution dispersing a hydraulic inorganic powder can have a lower viscosity for the same use amount of dispersing agent as compared with the case where a 100% organic solvent is used as a dispersing agent. This improves workability and infiltration; shortens time necessary for removal of the dissolving agent; reduces the necessary use amount of dispersion medium; and reduces voids developed at the sites occupied by dispersion medium during removal of the dispersion medium, thereby resolving the problems involved in the reduced strength of hydraulic reinforcing material.
(2) If at least water is used as a dissolving agent for an organic binder, it will be possible to use water-soluble organic binders, polymer emulsions and polymer dispersants.

The hydraulic compound to be used for manufacture of the fiber-compounded hardened product of this invention is dry and can be stored over a long period until it is exposed to water. Moreover, because the hydraulic compound is flexible, it can be molded to any form before it hardens, and thus the hardened product obtained therefrom can take any desired form.

The fiber-compounded hardened product of this invention comprises hydraulic inorganic powder hardened around high-strength reinforcing fiber, and is largely composed of inorganic substances. Therefore, it is light in weight and excellent in mechanical strength; its tensile strength is better than steel; its density is smaller than aluminum; it is excellent in resistance to corrosion, resistance to fire and heat, shielding activity against electromagnetic waves; it is resistant to creep deformity; its thermal conduction is small; its coefficient of linear expansion is small; and it develops heat on passage of electric current. Therefore, it is utilizable as various single products or as a material of other products.

The reinforcing/repairing method of this invention based on application of a fiber-compounded hydraulic reinforcing material has following features: the application, being largely composed of inorganic substances, is highly adhesive to constructions made from materials chosen from mortar, concrete and steel; it is excellent in resistance to fire and heat; because it is flexible until it is exposed to water, it insures good workability; because it comprises a fiber-compounded hydraulic reinforcing material capable of hardening at site on exposure to water, it will dispense with primer treatment which otherwise would be required for increasing the adhesiveness of reinforcing material before the latter is put to use; and because it also dispenses with the use of a fire-proof coverage, it will greatly shorten period necessary for completion of a given construction, thereby reducing construction cost. A construction reinforced/repaired by the method of this invention based on application of a fiber-compounded hydraulic reinforcing material will be excellent in resistance to fire and heat, and in durability.

According to the method of this invention for reinforcing/repairing a construction or natural object based on underlaying of a fiber-compounded hydraulic reinforcing material, the fiber-compounded hydraulic reinforcing material has a structure in which hydraulic inorganic powder is bound to reinforcing fiber through an organic binder, and the hydraulic inorganic powder impregnates reinforcing fibers. Therefore, the underlay is highly affinitive to concrete slurry; and a construction or natural object reinforced/repaired with a hardened concrete substance resulting from a unified mass of concrete slurry and the underlay has a high strength and is excellent in durability. The method of this invention for reinforcing/repairing a construction or natural object based on underlaying of a fiber-compounded hydraulic reinforcing material is particularly effective for reinforcing/repairing tunnels and dams, water conduits, river constructions, water front/ocean constructions, underground constructions, the steepest slope of a cliff, which are usually damp, and refractory to the use of conventional reinforcing/repairing materials based on epoxy resin adhesives, because the fiber-compounded hydraulic reinforcing material used in this method has a property to harden when exposed to moisture, and particularly develops its hardening and adhesive activity when it is affixed to a construction or natural object which is always in a damp state.

According to the method of this invention for reinforcing/repairing a construction or natural object based on spraying of a fiber-compounded hydraulic reinforcing material, the fiber-compounded hydraulic reinforcing material has a structure in which hydraulic inorganic powder is bound to reinforcing fiber through an organic binder, and the hydraulic inorganic powder impregnates reinforcing fibers. Therefore, the spray is highly affinitive to cement-based slurry; and a construction or natural object reinforced/repaired with a hardened cement manufacture integratively united with the fiber-compounded hydraulic reinforcing material has a high strength and is excellent in durability.

With the fiber-compounded hydraulic reinforcing material in the form of continuous fiber used for manufacture of a structural element of this invention, hydraulic inorganic powder is bound to the reinforcing material in the form of continuous fiber through an organic binder, and the hydraulic inorganic powder impregnates reinforcing continuous fibers. Therefore, this fiber-compounded hydraulic reinforcing material has high affinity with cement-based slurry. A structural element obtained by combining such a fiber-compounded hydraulic reinforcing material in the form of continuous fiber together with cement-based slurry will give a structural element made of a fiber-reinforced cement-based hardened substance high in strength.

With the fiber-compounded hydraulic reinforcing material in the form of short fibers to be used for manufacture of a structural element of this invention, hydraulic inorganic powder is bound to the short fiber reinforcing material through an organic binder, and the hydraulic inorganic powder impregnates the reinforcing continuous fibers. Therefore, this fiber-compounded hydraulic reinforcing material has high affinity with cement-based slurry. A structural element obtained by combining such a short fiber-compounded hydraulic reinforcing material together with cement-based slurry will give a structural element made of a fiber-reinforced cement-based hardened substance devoid of any voids in matrix and high in strength.

## Claims

1. A fiber-compounded hydraulic reinforcing material comprising at least following constitutive elements [A], [B] and [C], of which binding of [A] and [C] is achieved through [B], and having a property of being flexible before it contacts with water, and of hardening on contact with water, wherein:
[A] Reinforcing fiber;
[B] Organic binder; and
[C] Unhardened and dry hydraulic inorganic powder.

2. A fiber-compounded hydraulic reinforcing material as described in claim 1 whose form is one chosen from the following groups:
1) long fiber group comprising strands, rovings, ropes and braids;
2) short fiber group which is obtained by cutting the member of long fiber group into pieces of a specific length; and
3) web group comprising unidirectional sheet, fabric, net, unwoven fabric and mat.

3. A fiber-compounded hydraulic reinforcing material as described in claim 1 wherein the content of an organic binder against the sum of [A], [B] and [C] is 0.1 - 40% in terms of volume ratio.

4. A fiber-compounded hydraulic reinforcing material as described in claim 1 wherein the reinforcing fiber is carbon fiber or carbonaceous fiber.

5. A fiber-compounded hydraulic reinforcing material as described in claim 1 wherein the particle diameter of hydraulic inorganic powder is 0.1 µm - 100 µm.

6. An package obtained by wrapping a fiber-compounded hydraulic reinforcing material as described in claim 1 in a moisture-proof packaging material.

7. A fiber-compounded reinforcing material comprising at least following constitutive elements [A], [B] and [C], in which a flexible hydraulic compound obtained by binding [A] and [C] through [B] hardens by hydration, wherein:
[A] Reinforcing fiber;
[B] Organic binder; and
[C] Unhardened and dry hydraulic inorganic powder.

8. A fiber-compounded hydraulic reinforcing material as described in claim 7 wherein the content of an organic binder against the sum of [A], [B] and [C] is 0.1 - 40% in terms of volume ratio.

9. A fiber-compounded hydraulic reinforcing material as described in claim 7 wherein the reinforcing fiber is carbon fiber or carbonaceous fiber.

10. A fiber-compounded hydraulic reinforcing material as described in claim 7 wherein the form of the hydraulic compound is chosen from strands, rovings, ropes, braids, unidirectional sheet, fabric, net, unwoven fabric and mat.

11. A fiber-compounded reinforcing material comprising at least following constitutive elements [A], [B] and [C], in which one or more flexible hydraulic compound obtained by binding [A] and [C] through [B] is laminated or assembled and hardens by hydration, chosen from compound in the form of strands, rovings, ropes, braids, unidirectional sheet, fabric, net, unwoven fabric and mat, wherein:
[A] Reinforcing fiber;
[B] Organic binder; and
[C] Unhardened and dry hydraulic inorganic powder.

12. A fiber-compounded hydraulic reinforcing material as described in claim 7 or 11 wherein a hydraulic compound, or a laminated or assembled comprising one or more hydraulic compounds is molded along the walls of a mold when it hardens via hydration.

13. A fiber-compounded reinforcing material as described in claim 7 wherein the fiber-compounded reinforcing material takes the form of short fibers.

14. A fiber-compounded reinforcing material comprising at least following constitutive elements [A], [B] and [C], in which a flexible hydraulic compound in the form of short fibers obtained by binding [A] and [C] through [B] is molded at the same time when it hardens by hydration, wherein:
[A] Reinforcing fiber;
[B] Organic binder; and
[C] Unhardened and dry hydraulic inorganic powder.

15. A method for producing a fiber-compounded hydraulic reinforcing material comprising the steps of:
(1) preparing organic binder solution dispersing a hydraulic inorganic powder by using hydraulic inorganic powder, a dispersion medium to disperse the hydraulic inorganic powder, and an organic binder;
(2) applying the organic binder solution dispersing a hydraulic inorganic powder obtained in the foregoing step to reinforcing fiber, thereby causing the organic binder solution dispersing a hydraulic inorganic powder to bind to the surface of reinforcing fiber and/or to impregnate reinforcing fibers;
(3) subjecting the reinforcing fiber having a layer of organic binder solution dispersing hydraulic inorganic powder thereupon to a drying and/or heating treatment; and
(4) obtaining a fiber-compounded hydraulic reinforcing material binding the hydraulic inorganic powder around reinforcing fiber through an organic binder; contains at least following constitutive elements [A], [B] and [C], of which binding [A] and [C]is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

16. A method for producing a fiber-compounded hydraulic reinforcing material comprising the steps of:
(1) dispersing hydraulic inorganic powder into organic binder solution;
(2) introducing reinforcing fiber into the thus obtained hydraulic inorganic powder dispersant, thereby causing the hydraulic inorganic powder dispersant to put on the surface of reinforcing fiber and/or the same dispersant to impregnate reinforcing fibers;
(3) subjecting the reinforcing fiber having a layer of organic binder solution dispersing hydraulic inorganic powder thereupon to a drying and/or heating treatment; and
(4) obtaining a fiber-compounded hydraulic reinforcing material binding the hydraulic inorganic powder around the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

17. A method for producing a fiber-compounded hydraulic reinforcing material comprising the steps of:
(1) introducing reinforcing fiber into organic binder solution, thereby causing an organic binder put on the surface of reinforcing fiber and/or the same binder to impregnate reinforcing fibers;
(2) passing the reinforcing fiber having a layer of organic binder thereupon through a vessel containing hydraulic inorganic powder, thereby causing the hydraulic inorganic powder to bind to the reinforcing fiber;
(3) subjecting the reinforcing fiber having a layer of organic binder with hydraulic inorganic powder bound to a drying and/or heating treatment; and
(4) obtaining a fiber-compounded hydraulic reinforcing material which has hydraulic inorganic powder bound around reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber:
[B] Organic binder; and
[C] Unhardened and dry hydraulic inorganic powder.

18. A method for producing a fiber-compounded hydraulic reinforcing material comprising the steps of:
(1) dispersing hydraulic inorganic powder into organic solvent;
(2) introducing reinforcing fiber into the thus obtained hydraulic inorganic powder dispersant, thereby causing the hydraulic inorganic powder dispersant to put on the surface of reinforcing fiber and/or the same dispersant to impregnate reinforcing fibers;
(3) passing the reinforcing fiber having a layer of hydraulic inorganic powder thereupon through a vessel containing organic binder solution, or spraying organic binder solution onto the same reinforcing fiber, thereby coating the surface of reinforcing fiber with the organic binder, and/or infiltrating the organic binder between the reinforcing fibers;
(4) subjecting the reinforcing fiber having a layer of organic binder with hydraulic inorganic powder bound to a drying and/or heating treatment; and
(5) obtaining a fiber-compounded hydraulic reinforcing material which has hydraulic inorganic powder bound around the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

19. A method for producing a fiber-compounded hydraulic reinforcing material comprising the steps of:
(1) using a dispersion medium, hydraulic inorganic powder to be dispersed into said medium, an dissolving agent to dissolve an organic binder, an organic binder to be dissolved in said dissolving agent, and other admixtures to be used as needed, and causing at least one of said dispersion medium, said dissolving agent and said other admixtures to contain water, and
applying above components one after another in above order or simultaneously to reinforcing fiber, while using an setting retarding means to retard the setting of hydraulic inorganic powder, thereby causing the above components to bind to the surface of reinforcing fiber or to impregnate reinforcing fibers; and sequently
(2) depriving the reinforcing fiber having undergone the foregoing treatment of water and/or organic solvent derived from the dispersion medium, dissolving agent for organic binder, and other admixtures added as needed used in the foregoing step; and
(3) obtaining a fiber-compounded hydraulic reinforcing material which has hydraulic inorganic powder bound around the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

20. A method for producing a fiber-compounded hydraulic reinforcing material as described in claim 19 wherein the step of using an setting retarding means comprises causing an setting retarder to be present in water to be used for hardening of hydraulic inorganic powder.

21. A method for producing a fiber-compounded hydraulic reinforcing material as described in claim 20 wherein the setting retarding effector is one or more chosen from a group comprising organic solvents, setting retarders and high performnance setting retarders.

22. A method for producing a fiber-compounded hydraulic reinforcing material as described in claim 20 wherein the setting retarding effector is an organic solvent derived from dispersants to disperse hydraulic inorganic powder.

23. A method for producing a fiber-compounded hydraulic reinforcing material as described in claim 19 wherein the step of using an setting retarding means to cause an setting retarder to be present in water to be used for hardening of hydraulic inorganic powder, comprises:
if the setting retarding effector is an organic solvent, causing the setting retarding effector to exist in water at 0 - 99 wt.% in terms of the ratio of organic solvent against the sum of water + organic solvent; or
if the setting retarding effector is one or more chosen from a group comprising setting retarders and high performnance setting retarders, causing an setting retarding effector 1 - 5 weight parts to exist in water in terms of solid weight against hydraulic inorganic powder 100 weight parts.

24. A method for producing a fiber-compounded hydraulic reinforcing material comprising the steps of:
(1) taking water as a dispersion medium, adding thereto an hydrophilic organic binder and, as needed, one or more chosen from a group comprising setting retarders and highly-active retarders, and then causing hydraulic inorganic powder to disperse into said solution to produce a organic binder solution dispersing a hydraulic inorganic powder;
(2) applying the organic binder solution dispersing a hydraulic inorganic powder to reinforcing fiber before the same binder solution completes hardening via hydration, thereby causing the organic binder solution dispersing a hydraulic inorganic powder to bind to the surface of reinforcing fiber and/or said binder solution to impregnate reinforcing fibers, and then subjecting the resulting reinforcing fiber to a drying and/or heating treatment; and
(3) obtaining a fiber-compounded hydraulic reinforcing material which has hydraulic inorganic powder bind to the reinforcing fiber through a hydrophilic organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

25. A method for producing a fiber-compounded hydraulic reinforcing material as described in claim 15, 19 or 24 wherein the means by which to apply a hydraulic inorganic powder dispersant to reinforcing fiber comprises one chosen from:
an air doctor coater, blade coater, rod coater, knife coater, squeeze coater, immersing machine, reverse roll coater, transfer roll coater, gravure coater, kiss coater, coater based on cast coating or spray coating, slot orifice coater, and coater based on extrusion coating.

26. A method for producing a fiber-compounded hydraulic reinforcing material as described in claim 24 wherein the time required for applying the organic binder solution dispersing a hydraulic inorganic powder to reinforcing fiber before the same binder solution completes hardening via hydration, thereby causing the organic binder solution dispersing a hydraulic inorganic powder to bind to the surface of reinforcing fiber and/or said binder solution to impregnate reinforcing fibers; and for subjecting the resulting reinforcing fiber to a drying and/or heating treatment to deprive the reinforcing fiber of water is 15 minutes or less from the time when the hydraulic inorganic fiber dispersing organic binder solution has been prepared.

27. A method for producing a fiber-compounded hydraulic reinforcing material as described in claim 24 wherein the hydrophilic organic binder is chosen from water-soluble polymer binders, emulsions of various polymers and dispersants of various polymers.

28. A method for producing a fiber-compounded hydraulic reinforcing material comprising the steps of:
(1) adding, to organic binder solution obtained by dissolving an organic binder into water or an organic solvent, water or a dispersion medium containing a mixture of water and an organic solvent, and, as needed, one or more chosen from a group comprising setting retarders and highly-active retarders, and then causing hydraulic inorganic powder to disperse into the thus obtained solution;
(2) introducing reinforcing fiber into the thus obtained organic binder solution dispersing a hydraulic inorganic powder, thereby causing the organic binder solution dispersing a hydraulic inorganic powder to bind to the surface of reinforcing fiber and/or said binder solution to impregnate reinforcing fibers;
(3) subjecting the reinforcing fiber as treated in the foregoing step to a drying and/or heating treatment, thereby depriving the reinforcing fiber of water and/or organic solvent; and
(4) obtaining a fiber-compounded hydraulic reinforcing material which has hydraulic inorganic powder bound to the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

29. A method for producing a fiber-compounded hydraulic reinforcing material comprising the steps of:
(1) dissolving an organic binder into water or an organic solvent, adding, as needed, one or more chosen from a group comprising setting retarders and highly-active retarders, and then introducing reinforcing fiber into the resulting organic binder solution, thereby causing the organic binder solution to put on the surface of reinforcing fiber and/or said binder solution to impregnate reinforcing fibers,
(2) passing the reinforcing fiber having a layer of organic binder thereupon through a vessel containing hydraulic inorganic powder, thereby causing the hydraulic inorganic powder to bind to the reinforcing fiber;
(3) subjecting the reinforcing fiber as treated in the foregoing step to a drying and/or heating treatment, thereby depriving the reinforcing fiber of water and/or organic solvent; and
(4) obtaining a fiber-compounded hydraulic reinforcing material which has hydraulic inorganic powder bound to the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

30. A method for producing a fiber-compounded hydraulic reinforcing material comprising the steps of:
(1) adding, to water or a dispersion medium obtained by mixing water and an organic solvent, as needed one or more chosen from a group comprising setting retarders and highly-active retarders, and then dispersing hydraulic inorganic powder therein;
(2) introducing reinforcing fiber into the thus obtained hydraulic inorganic powder dispersant, thereby causing the hydraulic inorganic powder dispersant to put on the surface of reinforcing fiber and/or said dispersant to impregnate reinforcing fibers;
(3) passing the reinforcing fiber as processed in the foregoing step through a vessel containing organic binder solution obtained by dissolving an organic binder into water or an organic solvent, thereby causing the reinforcing fiber to contact with the organic binder solution, or spraying the organic binder solution onto the reinforcing fiber, thereby coating the surface of reinforcing fiber with the organic binder and/or causing the organic binder to impregnate reinforcing fibers;
(4) subjecting the reinforcing fiber as treated in the foregoing step to a drying and/or heating treatment, thereby depriving the reinforcing fiber of water and/or organic solvent; and
(5) obtaining a fiber-compounded hydraulic reinforcing material which has hydraulic inorganic powder bound to the reinforcing fiber through an organic binder; contains at least following constitutive elements [A], [B] and [C], of which binding [A] and [C] is achieved through [B], and is dry; retains flexibility before it contacts with water; and has a property to let hydration/hardening reaction proceed on contact with water, wherein:
[A] Reinforcing fiber;
[B] Organic binder; and
[C] Unhardened and dry hydraulic inorganic powder.

31. A method for producing a fiber-compounded hydraulic reinforcing material as described in claim 15, 16, 17, 18, 19, 28, 29 or 30 wherein the organic binder is a water-soluble polymer binder.

32. A method for producing a fiber-compounded hydraulic reinforcing material as described in claim 19, 24, 28, 29 or 30 wherein the other admixtures to be used as needed are one or more chosen from a group comprising water reducing admixture, air entirying water reducing admixture, high performance water reducing admixture, fluidizers, setting retarders, high performnance setting retarders, and polymer dispersants for cement mixture.

33. A method for producing a fiber-compounded hydraulic reinforcing material wherein a fiber-compounded hydraulic reinforcing material produced by a method as described in claim 15, 16, 17, 18, 19, 24, 28, 29 or 30 is further cut into pieces of a specific length to give a fiber-compounded hydraulic reinforcing material in the form of chopped strands.

34. A method for producing a fiber-compounded hydraulic reinforcing material wherein one or a few fiber-compounded hydraulic reinforcing materials produced by a method as described in claim 15, 16, 17, 18, 19, 24, 28, 29 or 30 are further bundled, and then the bundles are woven or knit into fabric or net.

35. A method for producing a fiber-compounded hydraulic reinforcing material wherein fiber-compounded hydraulic reinforcing materials produced by a method as described in claim 15, 16, 17, 18, 19, 24, 28, 29 or 30 are pulled side by side in one direction, and spread like a sheet to give a unidirectional sheet.

36. A method for producing a fiber-compounded hydraulic reinforcing material wherein two or several fiber-compounded hydraulic reinforcing materials produced by a method as described in claim 15, 16, 17, 18, 19, 24, 28, 29 or 30 are put together and twisted into a cord, and the cords are bundled and twisted to give a fiber-compounded hydraulic reinforcing material in the form of ropes or braids.

37. A method for reinforcing/repairing a construction comprising the steps of:
applying a fiber-compounded reinforcing material comprising at least following constitutive elements [A], [B] and [C], of which binding [A] and [C] is achieved through [B], and having a property of being flexible before it contacts with water and hardening on contact with water, onto the application surface of a construction, and
causing the fiber-compounded hydraulic reinforcing material to harden via hydration on that application surface, wherein:
[A] Reinforcing fiber;
[B] Organic binder; and
[C] Unhardened and dry hydraulic inorganic powder.

38. A method for reinforcing/repairing a construction as described in claim 36 wherein the construction is made from one or more materials chosen from concrete and steel.

39. A method for reinforcing/repairing a construction as described in claim 37 wherein the step of hardening via hydration a fiber-compounded hydraulic reinforcing material on a application surface is performed in accordance with one or more chosen from the following processes (1) to (3):
(1) process in which a application surface is wetted with water in advance, and a fiber-compounded hydraulic reinforcing material is applied thereto;
(2) Process in which a fiber-compounded hydraulic reinforcing material is applied to a application surface and then water is sprayed over it; and
(3) process in which water is given to a fiber-compounded hydraulic reinforcing material, and the wetted material is applied to a application surface.

40. A method for reinforcing/repairing a construction as described in claim 37 wherein the step of applying a fiber-compounded hydraulic reinforcing material onto a application surface comprises applying a fiber-compounded hydraulic reinforcing material alone, or after a precoat comprising one or more chosen from water, polymer dispersant for cement mixture, cement mortar and polymer cement mortar has been applied, onto the application surface.

41. A method for reinforcing/repairing a construction or natural object wherein the step of applying a fiber-compounded hydraulic reinforcing material of a method for reinforcing/repairing a construction as described in claim 37 comprises the use of a fiber-compounded hydraulic reinforcing material whose form is one, or two or more combined chosen from the following categories (1) to (4):
(1) fiber-compounded hydraulic reinforcing material in the form of one or more chosen from strands, rovings, ropes and braids;
(2) fiber-compounded hydraulic reinforcing material in the form of fabric or net;
(3) fiber-compounded hydraulic reinforcing material in the form of unwoven fabric or mat; and
(4) fiber-compounded hydraulic reinforcing material in the form of the unidirectional sheet obtained by processing fiber-compounded hydraulic reinforcing materials classified to category (1).

42. A method for reinforcing/repairing a construction as described in claim 37 wherein the content of an organic binder contained in the fiber-compounded hydraulic reinforcing material against the sum of [A], [B] and [C] is 0.1 - 40% in terms of volume ratio.

43. A method for reinforcing/repairing a construction as described in claim 37 wherein the reinforcing fiber is carbon fiber or carbonaceous fiber.

44. A method for reinforcing/repairing a construction as described in claim 37 wherein the step of applying a fiber-compounded hydraulic reinforcing material onto the application surface of a construction comprises application of a fiber-compounded hydraulic reinforcing material whose form is chosen from unidirectional sheet, fabric, net, unwoven fabric and mat.

45. A method for reinforcing/repairing a construction as described in claim 37 wherein the step of applying a fiber-compounded hydraulic reinforcing material onto the application surface of a construction comprises winding a fiber-compounded hydraulic reinforcing material in the form of strands, rovings, ropes or braids round the application surface.

46. A structur for reinforcing/repairing a construction wherein a fiber-compounded hydraulic reinforcing material containing reinforcing fiber, an organic binder and unhardened and dry hydraulic inorganic powder in combination hardens via hydration on the application surface of a construction, thereby integratively uniting with the construction.

47. A structure for reinforcing/repairing a construction wherein the structure for reinforcing/repairing a construction as described in claim 46 is based on a fiber-compounded hydraulic reinforcing material whose form is one, or two or more chosen from the following categories (1) to (4):
(1) fiber-compounded hydraulic reinforcing material in the form of one or more chosen from strands, rovings, ropes and braids;
(2) fiber-compounded hydraulic reinforcing material in the form of fabric or net;
(3) fiber-compounded hydraulic reinforcing material in the form of unwoven fabric or mat; and
(4) fiber-compounded hydraulic reinforcing material in the form of the unidirectional sheet obtained by processing the fiber-compounded hydraulic reinforcing materials classified to category (1).

48. A method for reinforcing/repairing a construction comprising the step of:
applying a fiber-compounded reinforcing material comprising at least following constitutive elements [A], [B] and [C], in which a flexible hydraulic compound obtained by binding [A] and [C] through [B] has hardened via hydration, onto the application surface of a construction wherein:
[A] Reinforcing fiber;
[B] Organic binder; and
[C] Unhardened and dry hydraulic inorganic powder.

49. A method for reinforcing/repairing a construction or natural object comprising the steps of:
(1) applying a fiber-compounded reinforcing material comprising at least following constitutive elements [A], [B] and [C], of which binding [A] and [C] is achieved through [B], and having a property of being flexible before it contacts with water and hardening on contact with water, onto the application surface of a construction or natural object, or onto the application surface of a construction or natural object given a precoat material;
(2) heaping and/or spraying concrete slurry around the fiber-compounded hydraulic reinforcing material to overlay the hydraulic reinforcing material, thereby hydrating the latter; and
(3) causing the hydraulic reinforcing material and concrete slurry to harden concurrently to form a unified mass, wherein:
[A] Reinforcing fiber;
[B] Organic binder; and
[C] Unhardened and dry hydraulic inorganic powder.

50. A method for reinforcing/repairing a construction or natural object wherein the step of applying a fiber-compounded hydraulic reinforcing material of a method for reinforcing/repa iring a construction or natural object as described in claim 49 comprises using one or combining two or more chosen from fiber-compounded hydraulic reinforcing materials whose form is chosen from the following categories (1) to (4):
(1) fiber-compounded hydraulic reinforcing material in the form of one or more chosen from strands, rovings, ropes and braids;
(2) fiber-compounded hydraulic reinforcing material in the form of fabric or net;
(3) fiber-compounded hydraulic reinforcing material in the form of unwoven fabric or mat; and
(4) fiber-compounded hydraulic reinforcing material in the form of the unidirectional sheet obtained by processing the fiber-compounded hydraulic reinforcing materials classified to category (1).

51. A method for reinforcing/repairing a construction or natural object as described in claim 49 wherein the construction is made from one or more materials chosen from concrete, steel and natural objects.

52. A method for reinforcing/repairing a construction or natural object as described in claim 49 wherein the step of applying a fiber-compounded hydraulic reinforcing material onto the surface of a construction or natural object requiring reinforcement/repair comprises winding a fiber-compounded hydraulic reinforcing material round the application surface.

53. A method for reinforcing/repairing a construction or natural object as described in claim 49 wherein the precoat material is chosen from polymer dispersants for cement mixture, or polymer cement mortar slurry, cement mortar slurry and cement concrete slurry.

54. A method for reinforcing/repairing a construction or natural object as described in claim 49 wherein concrete slurry has been given a fiber-compounded reinforcing material in the form of the short fibers comprising at least following constitutive elements [A], [B] and [C], of which binding [A] and [C] is achieved through [B], and having a property of being flexible before it contacts with water and hardening on contact with water, wherein:
[A] Reinforcing fiber;
[B] Organic binder; and
[C] Unhardened and dry hydraulic inorganic powder.

55. A structure for reinforcing/repairing a construction or natural object wherein a fiber-compounded hydraulic reinforcing material containing reinforcing fiber, an organic binder and unhardened and dry hydraulic inorganic powder in combination lies below an overlying layer of concrete slurry on the application surface of a construction or natural object, so that the fiber-compounded hydraulic reinforcing material undergoing hydration and concrete slurry harden together to form a unified mass.

56. A structure for reinforcing/repairing a construction or natural object as described in claim 55 wherein the fiber-compounded hydraulic reinforcing material is one or more chosen from fiber-compounded hydraulic reinforcing materials whose form is classified to the following categories (1) to (4):
(1) continuous fiber whose form is one or more chosen from strands, rovings, ropes and braids;
(2) fabric or net woven from continuous fiber whose form is one or more chosen from strands, rovings, ropes and braids;
(3) unwoven fabric or mat obtained by taking continuous fibers whose form is one or more chosen from strands, rovings, ropes and braids, or cutting the continuous fibers into pieces, and connecting them physically and chemically; and
(4) sheet obtained by processing continuous fiber whose form is one or more chosen from strands, rovings, ropes and braids.

57. A method for reinforcing/repairing a construction or natural object comprising the step of:
(1) applying a fiber-compounded reinforcing material comprising at least following constitutive elements [A], [B] and [C], in which a flexible hydraulic compound obtained by binding [A] and [C] through [B] has hardened via hydration, onto the application surface of a construction or natural object, or onto the application surface given a precoat material;
(2) heaping and/or spraying concrete slurry around the fiber-compounded hydraulic reinforcing material to overlay that hydraulic reinforcing material; and
(3) causing concrete slurry to harden to form a unified mass with the underlaying reinforcing material, wherein:
[A] Reinforcing fiber;
[B] Organic binder; and
[C] Unhardened and dry hydraulic inorganic powder.

58. A method for reinforcing/repairing a construction or natural object wherein a fiber-compounded reinforcing material in the form of short fibers comprising at least following constitutive elements [A], [B] and [C], of which binding [A] and [C] is achieved through [B], and having a property of being flexible before it contacts with water and hardening on contact with water, and cement-based slurry are caused to harden together to form a unified mass on the surface of a construction or natural object requiring reinforcement/repair, wherein:
[A] Reinforcing fiber;
[B] Organic binder; and
[C] Unhardened and dry hydraulic inorganic powder.

59. A method for reinforcing/repairing a construction or natural object comprising the steps of:
(1) preparing a fiber-compounded reinforcing material in the form of continuous fiber comprising at least following constitutive elements [A], [B] and [C], of which binding [A] and [C] is achieved through [B], and having a property of being flexible before it contacts with water and hardening on contact with water; and
(2) cutting the fiber-compounded hydraulic reinforcing fiber in the form of continuous fiber into the short fibers, while spraying the obtained short fibers onto the application surface of a construction or natural object, concurrently or alternately with spraying of cement-based slurry, thereby causing the short fiber-compounded hydraulic reinforcing material and cement-based slurry to harden together to form a unified mass, wherein:
[A] Reinforcing fiber;
[B] Organic binder; and
[C] Unhardened and dry hydraulic inorganic powder.

60. A method for reinforcing/repairing a construction or natural object comprising the steps of:
(1) preparing a fiber-compounded reinforcing material in the form of short fibers comprising at least following constitutive elements [A], [B] and [C], of which binding [A] and [C] is achieved through [B], and having a property of being flexible before it contacts with water and hardening on contact with water;
(2) kneading the fiber-compounded hydraulic reinforcing material in the form of short fibers together with mixing materials containing cement, aggregate and water, thereby obtaining fiber-compounded cement-based slurry; and
(3) spraying the fiber-compounded cement-based slurry on the application surface of a construction or natural object, or placing the fiber-compounded cement-based slurry into a mold assembled in advance on the application surface of a construction or natural object, thereby causing the short fiber-compounded hydraulic reinforcing material and cement-based slurry to harden together to form a unified mass, wherein:
[A] Reinforcing fiber;
[B] Organic binder; and
[C] Unhardened and dry hydraulic inorganic powder.

61. A structural element wherein a fiber-compounded hydraulic reinforcing material obtained by binding hydraulic inorganic powder to reinforcing fiber through an organic binder is buried in hardening state below a hardened cement manufacture which also serves as a component of the structural element, or has a hardened cement manufacture applied thereupon, thereby reinforcing that cement manufacture.

62. A structural element wherein a fiber-compounded hydraulic reinforcing material resulting from hardening a fiber-compounded hydraulic compound comprising hydraulic inorganic powder bound to reinforcing fiber through an organic binder is buried below a hardened cement manufacture which also serves as a component of the structural element, or has a hardened cement manufacture applied thereupon, thereby reinforcing that cement manufacture.

63. A structural element wherein a fiber-compounded reinforcing material in the form of short fibers comprising at least following constitutive elements [A], [B] and [C], of which binding [A] and [C] is achieved through [B], and having a property of being flexible before it contacts with water and hardening on contact with water, is buried in hardening state below a hardened cement manufacture which also serves as a component of the structural element, thereby reinforcing that hardened cement manufacture, wherein:
[A] Reinforcing fiber;
[B] Organic binder; and
[C] Unhardened and dry hydraulic inorganic powder.

64. A structural element as described in claim 61, 62 or 63 wherein the content of an organic binder contained in the fiber-compounded hydraulic reinforcing material against the sum of reinforcing fiber, an organic binder and hydraulic inorganic powder is 0.1 - 40% in terms of volume ratio.

65. A structural element as described in claim 61, 62 or 63 wherein the reinforcing fiber is carbon fiber or carbonaceous fiber.

66. A structural element as described in claim 61, 62 or 63 wherein the fiber-compounded hydraulic reinforcing material takes one or more forms chosen from sheet, strands, rovings, unidirectional sheet, ropes, braids, fabric, net, unwoven fabric and mat.

67. A method for preparing a structural element comprising the steps of:
(1) preparing a fiber-compounded reinforcing material comprising at least following constitutive elements [A], [B] and [C], of which binding [A] and [C] is achieved through [B], and having a property of being flexible before it contacts with water and hardening on contact with water;
(2) placing the fiber-compounded hydraulic reinforcing material, or hardened fiber-compounded hydraulic reinforcing material into a mold for manufacture of a structural element, and then filling the mold with cement-based slurry; and
(3) causing the hydraulic reinforcing material and cement-based slurry to harden together to form a unified mass, thereby obtaining a structural element, wherein:
[A] Reinforcing fiber;
[B] Organic binder; and
[C] Unhardened and dry hydraulic inorganic powder.

68. A method for prepareing a structural element as described in claim 67 wherein excess water is removed by suction which is generated during the process in which hydraulic inorganic powder of the hydraulic reinforcing material and cement-slurry filling the mold harden together.

69. A method for preparing a structural element comprising the steps of:
(1) preparing a fiber-compounded reinforcing material in the form of continuous fiber comprising at least following constitutive elements [A], [B] and [C], of which binding [A] and [C] is achieved through [B], and having a property of being flexible before it contacts with water and hardening on contact with water;
(2) introducing continuously the fiber-compounded hydraulic reinforcing material into an extruder, and, while feeding cement-based slurry into the extruder, continuously extruding from the outlet the fiber-compounded hydraulic reinforcing material embedded in cement-based slurry; and
(3) obtaining hardened extrusion products cut as needed, wherein:
[A] Reinforcing fiber;
[B] Organic binder; and
[C] Unhardened and dry hydraulic inorganic powder.

70. A method for preparing a structural element as described in claim 67 or 69 wherein the fiber-compounded hydraulic reinforcing material takes one or more forms chosen from strands, rovings, ropes, braids, fabric and net.

71. A method for preparing a structural element as described in claim 67 or 69 wherein cement-slurry containing a fiber-compounded hydraulic reinforcing material in the form of short fibers is used.

72. A method for preparing a structural element comprising the steps of:
(1) preparing a fiber-compounded reinforcing material in the form of continuous fiber comprising at least following constitutive elements [A], [B] and [C], of which binding [A] and [C] is achieved through [B], and having a property of being flexible before it contacts with water and hardening on contact with water;
(2) cutting the fiber-compounded hydraulic reinforcing fiber in the form of continuous fiber into the short fibers of a specific length, while spraying the obtained short fibers, concurrently or alternately with spraying of cement-based slurry, into a mold to fill up; and
(3) causing the fiber-compounded hydraulic reinforcing material in the form of short fibers and cement-based concrete slurry in the mold to harden together to form a unified mass, and removing the mass from the mold, thereby obtaining a structural element, wherein:
[A] Reinforcing fiber;
[B] Organic binder; and
[C] Unhardened and dry hydraulic inorganic powder.

73. A method for preparing a structural element as described in claim 72 wherein excess water is removed by suction which is generated during the process in which the short fiber-compounded hydraulic reinforcing material and cement-slurry introduced by spraying into the mold harden together.

74. A method for preparing a structural element comprising the steps of:
(1) preparing a fiber-compounded reinforcing material in the form of short fibers comprising at least following constitutive elements [A], [B] and [C], of which binding [A] and [C] is achieved through [B], and having a property of being flexible before it contacts with water and hardening on contact with water, wherein:
[A] Reinforcing fiber;
[B] Organic binder; and
[C] Unhardened and dry hydraulic inorganic powder;
(2) kneading the fiber-compounded hydraulic reinforcing material in the form of short fibers together with mixing materials containing cement, aggregate and water, to give cement-based slurry;
(3) introducing the cement-based slurry into a mold; and
(4) molding the cement-based slurry by one chosen from the following processes i) - iv), thereby causing the hydraulic reinforcing material and cement-based slurry to harden together to form a unified mass, and removing the mass from the mold to obtain a structural element, wherein:
i) process in which molding is achieved by spraying the cement-based slurry into a mold;
ii) process in which molding is achieved by placing the cement-based slurry into a mold;
iii) process in which molding is achieved by placing the cement-based slurry into a mold and then pressing it; and
iv) process in which extrusion molding is utilized.
